(19) Europäisches Patentamt / European Patent Office / Office européen des brevets

(11) **EP 4 383 620 A1**

(12) **EUROPEAN PATENT APPLICATION**
published in accordance with Art. 153(4) EPC

(43) Date of publication:
**12.06.2024 Bulletin 2024/24**

(21) Application number: **22851853.6**

(22) Date of filing: **14.07.2022**

(51) International Patent Classification (IPC):
**H04L 5/00** (2006.01)     **H04W 40/22** (2009.01)

(52) Cooperative Patent Classification (CPC):
**H04L 5/00; H04W 40/16; H04W 40/22; H04W 76/10**

(86) International application number:
**PCT/CN2022/105842**

(87) International publication number:
**WO 2023/011139 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021   CN 202110902560**

(71) Applicant: **ZTE Corporation**
**Shenzhen, Guangdong 518057 (CN)**

(72) Inventors:
 • **LI, Yong**
   **Shenzhen, Guangdong 518057 (CN)**
 • **LU, Zhaohua**
   **Shenzhen, Guangdong 518057 (CN)**
 • **WANG, Yuxin**
   **Shenzhen, Guangdong 518057 (CN)**
 • **CHEN, Yijian**
   **Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **WIRELESS NETWORK COMMUNICATION METHOD, ELECTRONIC DEVICE, AND STORAGE MEDIUM**

(57)     Embodiments of the present disclosure relate to the technical field of network communications, and in particular, to a wireless network communication method, an electronic device, and a storage medium. According to the wireless network communication method, a mobile terminal establishes a link with a first network element, wherein the operation that the mobile terminal establishes the link with the first network element includes: a signal in a specific form is transmitted on a specific channel, so that the first network element detects the signal in the specific form on the specific channel, wherein the link is used by the first network element to relay a signal between the mobile terminal and a second network element.

**Fig. 2**

A mobile terminal receives first instruction information sent by a second network element, wherein the first instruction information is used for instructing the mobile terminal to transmit a signal in a specific form on a specific channel — 100

The mobile terminal establishes a link with a first network element, including: the signal in the specific form is transmitted on the specific channel, so that the first network element detects the signal in the specific form on the specific channel, wherein the link is used by the first network element to relay a signal between the mobile terminal and the second network element — 101

EP 4 383 620 A1

## Description

## Cross-Reference to Related Application

The present disclosure is based on and claims priority to Chinese Patent Application No. "2021109025606" filed on August 6, 2021, the disclosure of which is incorporated herein by reference in its entirety.

## Technical Field

Embodiments of the present disclosure relate to the field of network communications, and in particular, to a wireless network communication method, an electronic device, and a storage medium.

## Background

In wireless communications, in order to achieve higher link capacity and better coverage and improve the communication quality, a relay node (i.e., a first network element) is usually provided between a base station and a terminal, so as to relay a signal between the base station and the terminal. For example, when there is an obstacle between the base station and the terminal, the signal directly communicated between the base station and the terminal becomes weak, and at this time, the first network element is used to relay the signal between the base station and the terminal, so that the blocking of the obstacle can be avoided, thereby improving the strength of the signal of the receiving end in the base station and the terminal. For another example, in a case where the distance between the base station and the terminal is large, the signal directly communicated between the base station and the terminal becomes weak, and the first network element is used to relay the signal between the base station and the terminal, so that the strength of the signal of the receiving end in the base station and the terminal can be improved.

However, the first network element may also relay interference not expected to be relayed, thereby increasing the interference of a communication system, and causing the deterioration of the communication quality of the communication system.

## Summary

The embodiments of the present disclosure provide a wireless network communication method, including: a mobile terminal establishes a link with a first network element, including: a signal in a specific form is transmitted on a specific channel, so that the first network element detects the signal in the specific form on the specific channel, wherein the link is used by the first network element to relay a signal between the mobile terminal and a second network element.

The embodiments of the present disclosure further provide a wireless network communication method, including: a mobile terminal establishes a link with a first network element, including: a signal in a specific form is detected on a specific channel, wherein the link is used by the first network element to relay a signal between the mobile terminal and a second network element, and the signal in the specific form is transmitted by the first network element.

The embodiments of the present disclosure further provide a wireless network communication method, including: a first network element establishes a link with a mobile terminal, including: a signal in a specific form transmitted by the mobile terminal is detected on a specific channel; and the first network element relays a signal between the mobile terminal and a second network element according to the link.

The embodiments of the present disclosure further provide a wireless network communication method, including: a first network element establishes a link with a mobile terminal, including: a signal in a specific form is transmitted on a specific channel, so that the mobile terminal detects the signal in the specific form on the specific channel; and the first network element relays a signal between the mobile terminal and a second network element according to the link.

The embodiments of the present disclosure further provide a wireless network communication method, including: a second network element sends first instruction information to a mobile terminal, wherein the first instruction information is used for instructing the mobile terminal to transmit a signal in a specific form on a specific channel, so that a first network element detects the signal in the specific form on the specific channel, wherein the first network element is used for relaying a signal between the mobile terminal and the second network element.

The embodiments of the present disclosure further provide a wireless network communication method, including: a second network element sends second instruction information to a mobile terminal, wherein the second instruction information is used for instructing the mobile terminal to detect a signal in a specific form on a specific channel, wherein the signal in the specific form is transmitted by a first network element, and the first network element is used for relaying a signal between the mobile terminal and the second network element.

The embodiments of the present disclosure further provide an electronic device, including: at least one processor; and a memory in communication connection with the at least one processor, wherein the memory stores instructions executable by the at least one processor, and the instructions, when executed by the at least one processor, cause the at least one processor to execute any one of the wireless network communication methods as described above.

The embodiments of the present disclosure further provide a computer-readable storage medium, the computer-readable storage medium storing a computer program, which, when executed by a processor, causes the processor to execute any one of the wireless network communication methods as described above.

## Brief Description of the Drawings

Fig. 1 is a flowchart I of a wireless network communication method performed by a mobile terminal according to some embodiments of the present disclosure;

Fig. 2 is a flowchart II of a wireless network communication method performed by a mobile terminal according to some embodiments of the present disclosure;

Fig. 3 is a flowchart III of a wireless network communication method performed by a mobile terminal according to some embodiments of the present disclosure;

Fig. 4 is a flowchart IV of a wireless network communication method performed by a mobile terminal according to some embodiments of the present disclosure;

Fig. 5 is a flowchart I of a wireless network communication method performed by a first network element according to some embodiments of the present disclosure;

Fig. 6 is a flowchart II of a wireless network communication method performed by a first network element according to some embodiments of the present disclosure;

Fig. 7 is a flowchart III of a wireless network communication method performed by a first network element according to some embodiments of the present disclosure;

Fig. 8 is a flowchart I of a wireless network communication method performed by a second network element according to some embodiments of the present disclosure;

Fig. 9 is a flowchart II of a wireless network communication method performed by a second network element according to some embodiments of the present disclosure; and

Fig. 10 is a schematic structural diagram of an electronic device according to some embodiments of the present disclosure.

## Detailed Description

The embodiments of the present disclosure propose a wireless network communication method, an electronic device, and a storage medium, which may reduce interference generated by relaying in a communication system and improve the communication quality of the communication system.

According to the wireless network communication method in the embodiments of the present disclosure, a link between a mobile terminal and a first network element is established in a manner that the mobile terminal transmits a signal in a specific form on a specific channel, so that the first network element detects the signal in the specific form on the specific channel. In this way, the first network element only needs to perform detection on the specific channel, so that the detection range of the signal detected by the first network element may be narrowed. By adopting this solution, interference present in non-specific channels will not be detected by the first network element, and as the signal is in the specific form, the signal can be distinguished from other signals and interference information on the specific channel, so that the first network element can recognize the signal sent by the mobile terminal, thereby recognizing the mobile terminal. Further, only the signal between the mobile terminal and the second network element is relayed and forwarded, and interference will not be relayed, thereby reducing interference of a communication system and improving the communication quality of the communication system.

To make the objects, technical solutions and advantages of the embodiments of the present disclosure clearer, hereinafter, embodiments of the present disclosure will be described in detail in combination with the accompanying drawings. However, a person having ordinary skill in the art may understand that in the embodiments of the present disclosure, many technical details are proposed to enable a reader to better understand some embodiments of the present disclosure. However, even without these technical details, and various changes and modifications based on the following various embodiments, technical solutions of some embodiments of the present disclosure can also be implemented. Division of the following various embodiments is for convenience of illustration, and shall not constitute any limitation to exemplary implementations of the present disclosure. The various embodiments may be combined with each other and referred to each other without any contradiction.

Some embodiments of the present disclosure relate to a wireless network communication method, which includes the following operation 101.

At operation 101, a mobile terminal establishes a link with a first network element, including: a signal in a specific form is transmitted on a specific channel, so that the first network element detects the signal in the specific form on the specific channel, wherein the link is used by the first network element to relay a signal between the mobile terminal and a second network element.

The wireless network communication method of the present embodiment is performed by a mobile terminal. The mobile terminal may be a wireless communication device, such as a mobile phone and a tablet, etc. The first network element may be a network element between the mobile terminal and the second network element, and the second network element is a network element in communication with the mobile terminal. The first network element may be, for example, a relay node or a positioning node, etc. The relay node is a node between the mobile terminal and the second network element which need to communicate with each other, for example, a Relay Node (RN), a Repeater and Reconfigurable Intelligent Surfaces (RIS), etc., and is configured to relay signals sent by the mobile terminal and the second network element, including amplifying the signals, forwarding the signals, reflecting the signals, and transmitting the signals, etc. Thus, blocking of an obstacle between the mobile terminal and the second network element can be avoided, or a communication distance between the mobile terminal and the second network element can be prolonged, thereby improving the strength of a signal received by a signal receiving end in the mobile terminal and the second network element, and improving the communication quality of a system.

However, in the process of relaying a signal, the relay node usually also relays interference to the mobile terminal and the second network element which receive the signal, thereby generating interference to normal communication between the mobile terminal and the second network element; or, in the process of relaying a signal, the relay node further relays the signal to a receiving end (which may be a mobile terminal or a second network element) that does not need to receive the signal, thereby causing interference to the receiving end that does not need to receive the signal.

However, according to the wireless network communication method in the present embodiment, a link between the mobile terminal and the first network element is established in a manner that the mobile terminal transmits a signal in a specific form on a specific channel, so that the first network element detects the signal in the specific form on the specific channel. In this way, the first network element only needs to perform detection on the specific channel, so that the detection range of the signal detected by the first network element may be narrowed. By adopting this solution, interference present in non-specific channels will not be detected by the first network element, and as the signal is in the specific form, the signal can be distinguished from other signals and interference information on the specific channel, so that the first network element can recognize the signal sent by the mobile terminal, thereby recognizing the mobile terminal. Further, only a signal between the mobile terminal and the second network element is relayed and forwarded, and interference will not be relayed, thereby reducing interference of a communication system and improving the communication quality of the communication system.

That is to say, the operation that the mobile terminal establishes the link with the first network element includes: the mobile terminal transmits the signal in the specific form on the specific channel, so that the first network element detects the signal in the specific form on the specific channel; and the first network element relays a signal between the mobile terminal and the second network element according to the link. The first network element detects the signal in the specific form on the specific channel, thereby recognizing the mobile terminal. For example, the first network element may recognize the mobile terminal by recognizing a position of the mobile terminal, or by recognizing electromagnetic wave ripple characteristics of signals to and from the mobile terminal, or by recognizing beams aligned with the mobile terminal, or by recognizing other characteristics of the mobile terminal. The first network element relays the signal between the mobile terminal and the second network element according to the link. For example, the first network element may relay the signal between the mobile terminal and the second network element according to characteristics of the mobile terminal; or the first network element may relay the signal between the mobile terminal and the second network element according to the position of the mobile terminal; or the first network element may relay the signal between the mobile terminal and the second network element according to the electromagnetic wave ripple characteristics of signals to and from the mobile terminal; or the first network element may relay the signal between the mobile terminal and the second network element according to the beams aligned with the mobile terminal; or the first network element may relay the signal between the mobile terminal and the second network element according to the specific channel used by the mobile terminal; or the first network element may relay the signal between the mobile terminal and the second network element according to the signal in the specific form used by the mobile terminal. The link may be established based on that the first network element recognizes the mobile terminal, or based on that the mobile terminal recognizes the first network element.

Hereinafter, implementation details of the wireless network communication method in the present embodiment are described in detail. The following contents are implementation details provided only for ease of understanding, and are not essential for implementing the present solution.

The terminal transmits the specific signal (i.e., the signal in the specific form) on the specific channel, so that the relay node detects the specific signal on the specific channel, and thus the link between the terminal and the relay node is established, so as to enable the relay node to determine to relay a signal between two parties, i.e., the mobile terminal and the second network element, in which one party is the terminal which transmits the specific signal on the specific channel, and the other party is the second network element, such as a base station. The terminal is usually mobile, the position thereof is not fixed, and the link thereof is also not fixed, and thus it is necessary to establish the link between the first network element and the terminal. The position of the base station is generally fixed, and thus the link between the first network element and the base station may be pre-established, or may not be established. Relaying the signal between the terminal and the base station is relaying to the base station a signal sent by the terminal and intended for the base station, or relaying to the terminal a signal sent by the base station and intended for the terminal.

In an example, the specific channel satisfies at least one of the following conditions: the specific channel is selected by the mobile terminal from a plurality of pre-defined channels; a time window of the specific channel is determined according to a type of the first network element or a length of the signal in the specific form; a frequency domain start position or a frequency domain center position of the specific channel is determined according to the type of the first network element; the frequency domain start position of the specific channel is determined according to a value of a start symbol of the signal in the specific form; a frequency domain range of the specific channel is determined according to the type of the first network element or the length of the signal in the specific form; a frequency domain spacing of the specific channel is determined according to the type of the first network element; a sub-carrier spacing of the specific channel is determined according to a carrier frequency; and a start sub-carrier of the specific channel is determined according to the carrier frequency.

In some exemplary implementations, a plurality of candidate channels may be pre-defined by a protocol, and the terminal selects one channel from the candidate channels for use. The mobile terminal may preset a mapping relationship between the type of the first network element or the length of the signal in the specific form and the size of the time window of the specific channel, so that the type of the first network element or the length of the signal in the specific form can be mapped to the size of the time window of the specific channel. Or, the mapping relationship between the type of the first network element or the length of the signal in the specific form and the size of the time window of the specific channel is preset by a protocol, so that the type of the first network element or the length of the signal in the specific form can be mapped to the size of the time window of the specific channel. For example, in a case where the first network element is of a mobile type, the time window of the specific channel is a short time window, and as a mobile characteristic of the first network element causes quick change of channel scenarios, the signal needs to be detected at a short time period; in a case where the first network element is of a fixed type, the time window of the specific channel is a long time window, and as the detection time of the long time window is long, there are many time opportunities for transmitting the specific signal. For example, the size of the short time window is M OFDM symbols, and the size of the long time window is K·M OFDM symbols, where M and K are positive integers, and K is greater than 1. For another example, in a case where the first network element is of a quick type, the time window of the specific channel is a short time window; in a case where the first network element is of a robust type, the time window of the specific channel is a long time window. For example, the size of the time window may be a monotonically increasing function of the length of the signal. For example, in a case where the length of the signal is U time units, the size of the time window is L·U time units, where U and L are positive integers, and K is greater than 1. The frequency domain start position or the frequency domain center position of the specific channel may be determined according to the type of the first network element. For example, in a case where the first network element is of a mobile type, the frequency domain start position of the specific channel is $f_0 - M \cdot N_{RB}$; and in a case where the first network element is of a fixed type, the frequency domain start position of the specific channel is $f_0 - K \cdot M \cdot N_{RB}$, where $f_0$ is the carrier frequency, $N_{RB}$ is a frequency domain size of a frequency domain resource block, $M$ and $K$ are positive integers, and $K$ is greater than 1. For another example, in a case where the first network element is of a quick type, the frequency domain start position of the specific channel is $f_0 - M \cdot N_{RB}$; and in a case where the first network element is of a robust type, the frequency domain start position of the specific channel is $f_0 - K \cdot M \cdot N_{RB}$, where $f_0$ is the carrier frequency, $N_{RB}$ is the frequency domain size of the frequency domain resource block, $M$ and $K$ are positive integers, and $K$ is greater than 1. For another example, in a case where the first network element is a mobile type, the frequency domain center position of the specific channel is $f_0 - M \cdot N_{RB}$; and in a case where the first network element being of a fixed type, the frequency domain center position of the specific channel is $f_0 - K \cdot (M + 1) \cdot NR_B$, where $f_0$ is the carrier frequency, $N_{RB}$ is the frequency domain size of the frequency domain resource block, $M$ is a non-negative integer, and $K$ is a positive integer. For another example, in a case where the first network element is of a quick type, the frequency domain center position of the specific channel is $f_0 - M \cdot N_{RB}$; and in a case where the first network element being of a robust type, the frequency domain center position of the specific channel is $f_0 - K \cdot (M + 1) \cdot NR_B$, where $f_0$ is the carrier frequency, $N_{RB}$ is the frequency domain size of the frequency domain resource block, $M$ is a non-negative integer, and $K$ is a positive integer. The frequency domain start position of the specific channel may be determined according to the value of the start symbol of the signal in the specific form. The frequency domain start position of the specific channel may be associated with the value of the start symbol of the signal in the specific form. For example, in a case where the value of the start symbol of the signal in the specific form is $x$, the frequency domain start position of the specific channel is

$$\lfloor \mathrm{mod}(angle(x), \phi) \rfloor \cdot N_{RB};$$

where $angle()$ represents taking an angle in the range [-$\pi, \pi$), mod ($a$, $b$) represents taking a modulus, $\lfloor \ \rfloor$ represents rounding down, and $N_{RB}$ is the frequency domain size of the frequency domain resource block. The frequency domain range of the specific channel may be obtained by mapping according to the type of the first network element or the length of the signal in the specific form. For example, in a case where the first network element is of a mobile type, the size of the frequency domain range of the specific channel is $M - N_{RB}$, and the frequency domain start position of the specific channel is $f_0 - M \cdot N_{RB}$ ; in a case where the first network element is of a fixed type, the size of the frequency domain range of the specific channel is $K \cdot M \cdot N_{RB}$, and the frequency domain start position of the specific channel is $f_0 - K \cdot M \cdot N_{RB}$ ; where $f_0$ is the carrier frequency, $N_{RB}$ is the frequency domain size of the frequency domain resource block, $M$ and $K$ are positive integers, and $K$ is greater than 1. For example, the size of the frequency domain range of the specific channel may be a monotonically increasing function of the length of the signal. For example, in a case where the length of the signal is $U$ frequency domain units, the size of the frequency domain range of the specific channel is $L \cdot U$ frequency domain units, and the frequency domain start position of the specific channel is $f_0 - L \cdot U$ ; where $f_0$ is the carrier frequency, and $U$ and $L$ are positive integers. The frequency domain spacing of the specific channel may be determined according to the type of the first network element. For example, in a case where the first network element is of a mobile type, the frequency domain spacing of the specific channel is $N_{RB}$; in a case where the first network element is of a fixed type, the size of the frequency domain range of the specific channel is $K \cdot N_{RB}$; where $N_{RB}$ is the frequency domain size of the frequency domain resource block, and $K$ is a positive integer greater than 1. The sub-carrier spacing of the specific channel may be determined according to the carrier frequency. For example, in a case where the carrier frequency is 6 GHz or less, the sub-carrier spacing of the specific channel is 15 kHz; in a case where the carrier frequency is between 6 GHz and 28 GHz, the sub-carrier spacing of the specific channel is 30 kHz; in a case where the carrier frequency is between 28 GHz and 65 GHz, the sub-carrier spacing of the specific channel is 60 kHz. The start sub-carrier of the specific channel may be determined according to the carrier frequency. For example, in a case where the carrier frequency is 6 GHz or less, the start sub-carrier of the specific channel is lower than the carrier frequency; in a case where the carrier frequency is 6 GHz or more, the start sub-carrier of the specific channel is at the carrier frequency.

The specific channel and the signal in the specific form may be determined by the mobile terminal, and may alternatively be determined by the first network element.

In the present embodiment, the specific channel has characteristics, and therefore during system communication, the complexity of detecting the specific signal by the first network element can be reduced.

In an example, the signal in the specific form satisfies at least one of the following conditions: a composition structure of the signal in the specific form is determined according to a type of the first network element; a type of the signal in the specific form is determined according to a type of the mobile terminal; a sequence of the signal in the specific form is determined according to the type of the first network element or a frequency domain position of the specific channel; a length of the signal in the specific form is determined according to a frequency domain range of the specific channel or a time window of the specific channel; a length of a preamble portion of the signal in the specific form is determined according to the type of the first network element; the signal in the specific form contains identifier information of the mobile terminal; and the signal in the specific form contains capability information of the mobile terminal.

In some exemplary implementations, there may be a mapping relationship between the composition structure of the signal in the specific form and the type of the first network element. For example, in a case where the type of the first network element is a mobile type, the composition structure of the signal in the specific form is XY; in a case where the type of the first network element is a fixed type, the composition structure of the signal in the specific form is XYXXYY, wherein X represents one segment of signal sequence and Y represents another segment of signal sequence. For example, X represents one segment of signal sequence with uniformly rotated phase, Y represents another segment of signal sequence with uniformly rotated phase, and the phase rotation speed of the X sequence is different from that of the Y sequence. For another example, X represents one segment of signal sequence with uniformly rotated phase, and Y represents another segment of signal sequence with uniformly accelerated rotated phase. The mobile terminal determines the composition structure of the signal in the specific form according to the mapping relationship. There may be a mapping relationship between the type of the signal in the specific form and the type of the mobile terminal, and according to the mapping relationship, the type of the signal in the specific form may be determined. For example, the terminals may be categorized into a first-type terminal, a second-type terminal and a third-type terminal according to the capabilities of the terminals, from weak to strong. The first-type terminal corresponds to a first type of signal in the specific form, for example, a signal having a signal composition structure of XY or XYXXYY, wherein X represents one segment of signal sequence with uniformly rotated phase, and Y represents another segment of signal sequence with uniformly rotated phase. The second-type terminal corresponds to a second type of signal in the specific form, for example, a signal having a signal composition structure of XY or XYXXYY, wherein X represents one segment of signal sequence with uniformly accelerated rotated phase, and Y represents another segment of signal sequence with uniformly accelerated rotated phase. The third-type terminal corresponds to, a third type of signal in the specific form, for example, a signal having a signal composition structure of XY or XYXXYY, wherein X represents one segment of signal sequence with uniformly rotated phase, and Y represents another segment of signal sequence with uniformly accelerated rotated phase. The terminals can alternatively be categorized into a large-bandwidth terminal, a high-reliability and low-latency terminal and a narrow-band terminal according to service requiring to be carried out. The large-bandwidth terminal corresponds to a first type of signal in the specific form, for example, a signal having a signal composition structure of XY or XYXXYY, wherein X represents one segment of signal sequence with uniformly rotated phase, and Y represents another segment of signal sequence with uniformly rotated phase. The high-reliability and low-latency terminal corresponds to a second type of signal in the specific form, for example, a signal having a signal composition structure of XY or XYXXYY, wherein X represents one segment of signal sequence with uniformly accelerated rotated phase, and Y represents another segment of signal sequence with uniformly accelerated rotated phase. The narrow-band terminal corresponds to a third type of signal in the specific form, for example, a signal having a signal composition structure of XY or XYXXYY, wherein X represents one segment of signal sequence with uniformly rotated phase, and Y represents another segment of signal sequence with uniformly accelerated rotated phase. There may be a mapping relationship between the sequence of the signal in the specific form and the type of the first network element, or between the sequence of the signal in the specific form and the frequency domain position of the specific channel; and the sequence of the signal in the specific form may be determined according to the mapping relationship. For example, a first-type first network element corresponds to a first type of signal in the specific form, for example, a signal having a signal composition structure of XY or XYXXYY, wherein X represents one segment of signal sequence with uniformly rotated phase, and Y represents another segment of signal sequence with uniformly rotated phase. A second-type first network element corresponds to a second type of signal in the specific form, for example, a signal having a signal composition structure of XY or XYXXYY, wherein X represents one segment of signal sequence with uniformly accelerated rotated phase, and Y represents another segment of signal sequence with uniformly accelerated rotated phase. A third-type first network element corresponds to a third type of signal in the specific form, for example, a signal having a signal composition structure of XY or XYXXYY, wherein X represents one segment of signal sequence with uniformly rotated phase, and Y represents another segment of signal sequence with uniformly accelerated rotated phase. For example, the sequence of the signal in the specific form may be generated by cyclic shift of a sequence $a_0 a_1 a_2 \cdots a_{N-1}$, and the magnitude of the shift amount may be determined by the frequency domain position of the specific channel, where $a_i$ repre-

sents an element in the sequence, and $N$ represents the length of the sequence. There may be a mapping relationship between the length of the signal in the specific form and the frequency domain range of the specific channel, or between the length of the signal in the specific form and the size of the time window of the specific channel; and according to the mapping relationship, the length of the signal in the specific form may be determined. For example, the size of the frequency domain range of the specific channel is $L \cdot U$ frequency domain units, the frequency domain start position of the specific channel is $f_0 - L \cdot U$, and the length of the signal is $U$; where $f_0$ is the carrier frequency, and $U$ and $L$ are positive integers. For another example, the size of the time window of the specific channel is $L \cdot U$ time units, and the length of the signal is $U$, and $U$ and $L$ are positive integers. There may be a mapping relationship between the length of the signal in the specific form and the type of the first network element; and according to the mapping relationship, the length of the preamble portion of the signal in the specific form may be determined. For example, corresponding to the first-type first network element, the length of the signal in the specific form is $M_1$; and corresponding to the second-type first network element, the length of the signal in the specific form is $M_2$, wherein $M_1$ and $M_2$ are different positive integers.

The signal in the specific form may alternatively be generated according to the specific channel after the specific channel is determined. For example, the sequence of the signal in the specific form is determined according to the frequency domain position of the specific channel. For another example, the frequency domain position of the specific channel is mapped to the sequence of the signal in the specific form. For another example, the length of the signal in the specific form is determined according to the frequency domain range of the specific channel. For example, the frequency domain range of the specific channel is mapped to the length of the signal in the specific form. For another example, the length of the signal in the specific form is determined according to the time window range of the specific channel. For example, the time window range of the specific channel is mapped to the length of the signal in the specific form.

In the present embodiment, the signal in the specific form has characteristics, and therefore during system communication, the complexity of detecting the specific signal by the first network element can be reduced. When the signal in the specific form contains identifier information of the mobile terminal, the first network element can recognize each received signal in the specific form to recognize the signal is sent by which mobile terminal, and then different signals can be correspondingly sent to corresponding receiving ends, thereby avoiding wrong sending of the signal, which causes interference to the signal receiving ends.

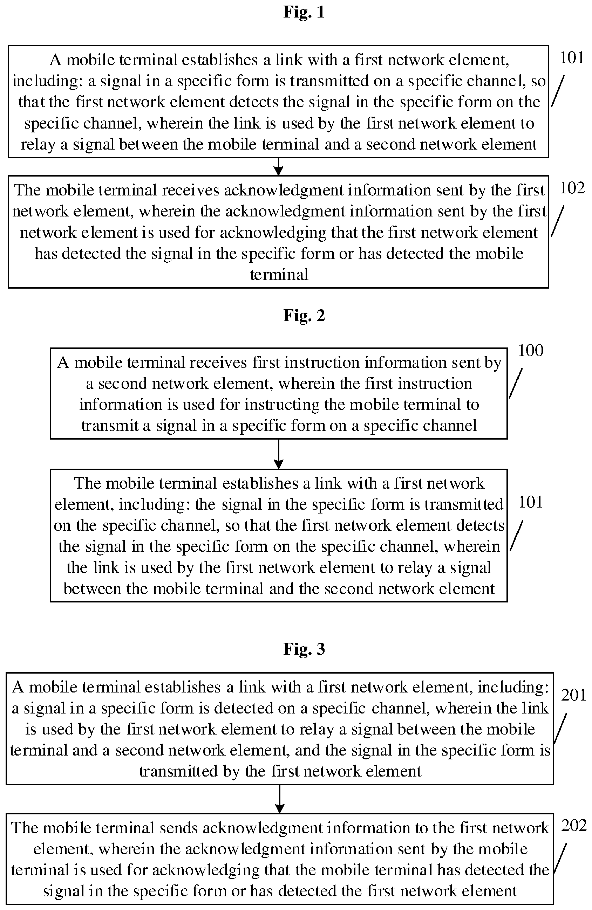

In an example, as shown in Fig. 1, after the mobile terminal transmits the signal in the specific form on the specific channel, the method may further include the following operation 102.

At operation 102, the mobile terminal receives acknowledgment information sent by the first network element, wherein the acknowledgment information sent by the first network element is used for acknowledging that the first network element has detected the signal in the specific form or has detected the mobile terminal.

In the present embodiment, the mobile terminal receives the acknowledgment information sent by the first network element, that is, after the link is established, the first network element needs to confirm the establishment of the link, so that the established link is more reliable.

In some exemplary implementations, the acknowledgment information sent by the first network element satisfies at least one of the following conditions: the acknowledgment information sent by the first network element contains identifier information of the first network element; the acknowledgment information sent by the first network element contains identifier information of the mobile terminal; the acknowledgment information sent by the first network element is another signal transmitted in the specific form; the acknowledgment information sent by the first network element is a signal transmitted in a form of a message; the acknowledgment information sent by the first network element is a signal transmitted in a form of a signaling; the acknowledgment information sent by the first network element is a signal transmitted via a dedicated channel; first acknowledgment information sent by the first network element is a signal transmitted via a channel customized for the mobile terminal; and the first acknowledgment information sent by the first network element is a signal transmitted via a broadcast channel.

The acknowledgment information includes an identifier of the terminal, so that the terminal can know which terminal has been detected by the first network element, so that the terminal sending the specific signal determines whether the specific signal sent by the terminal has been detected. The terminal receives the acknowledgment information of the first network element, and the acknowledgment information is used for acknowledging that the specific signal has been detected, or acknowledging that the terminal has been detected.

In the present embodiment, the acknowledgment information indicates that the first network element has detected the signal in the specific form or has detected the mobile terminal, and notifies the mobile terminal, so that the mobile terminal can learn that the signal in the specific form has been sent successfully and it is not necessary to continue sending the signal in the specific form, thereby saving communication resources.

In an example, the wireless network communication method may further include: the mobile terminal sends first request information to the first network element, wherein the first request information is used for representing that the mobile terminal requests the first network element to enable a service for the mobile terminal or disable a service for the mobile terminal.

In some exemplary implementations, the first request information may be contained in the signal in the specific form transmitted by the mobile terminal, or the first request information is contained in another signal different from the signal in the specific form transmitted by the mobile terminal, and said another signal is separately transmitted to the first network element.

In an example, the service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element sends position information of the mobile terminal to the second network element; the first network element sends the position information of the mobile terminal to the mobile terminal; and the first network element provides an emergency call for the mobile terminal.

In an example, after the mobile terminal transmits the signal in the specific form on the specific channel, the method may further include: the mobile terminal receives the acknowledgment information sent by the first network element, wherein the acknowledgment information sent by the first network element is used for acknowledging that the first network element has detected the signal in the specific form or has detected the mobile terminal.

In an example, after the mobile terminal sends the first request information to the first network element, the method may further include: the mobile terminal receives first response information sent by the first network element, wherein the first response information is used for representing that the first network element accepts a request of the mobile terminal or rejects the request of the mobile terminal.

In some exemplary implementations, the first response information and the acknowledgment information sent by the first network element are contained in the same signal and sent to the mobile terminal, or the first response information and the acknowledgment information sent by the first network element are contained in different signals, and the different signals are separately transmitted to the mobile terminal.

In the present embodiment, in a scenario, the signal of the second network element (for example, a base station) cannot directly reach the terminal, and the terminal cannot transmit the signal in the specific form on the specific channel based on information of the base station.

In an example, as shown in Fig. 2, before the mobile terminal transmits the signal in the specific form on the specific channel, the method may further include the following operation 100.

At operation 100, the mobile terminal receives first instruction information sent by the second network element, wherein the first instruction information is used for instructing the mobile terminal to transmit the signal in the specific form on the specific channel.

In some exemplary implementations, at this time, the specific channel satisfies at least one of the following conditions: the specific channel is selected by the second network element from the plurality of pre-defined channels; the time window of the specific channel is specified by the second network element; the frequency domain position of the specific channel is specified by the second network element; the frequency domain range of the specific channel is specified by the second network element; and a start time of the specific channel is determined by a half-frame time of a synchronization signal block of a cell where the second network element is located. The specific channel and the signal in the specific form are determined by the second network element, and may be determined by negotiation between the second network element and the first network element or the mobile terminal.

The signal in the specific form satisfies at least one of the following conditions: the sequence of the signal in the specific form is determined by the second network element according to an index number of a cell served by the second network element or identifier information of the first network element, wherein the identifier information of the first network element is notified by the second network element to the mobile terminal; the sequence of the signal in the specific form is determined by the second network element according to an integer configured by the second network element for the mobile terminal, wherein the integer and the sequence have a mapping relationship; and the signal in the specific form contains identifier information of the mobile terminal.

In an example, the specific channel is configured by the base station. For example, the specific channel is configured by the base station in the following manners: for example, the base station indicates the time window of the specific channel, indicates the frequency domain position of the specific channel, and/or indicates the frequency domain range of the specific channel.

The specific channel is selected by the base station from the channels pre-defined by the protocol. For example, the plurality of candidate channels are pre-defined by the protocol, and the base station selects one channel therefrom as the specific channel and indicates the selected channel to the terminal.

The start time of the specific channel is determined according to a half-frame time where a cell synchronization signal block (SSB) is located. For example, the cell synchronization signal block is at an Xth half-frame, the start time of the specific channel is at an (X+k)th half-frame, where k is an integer not equal to 0, and k is pre-defined by a protocol or indicated to the terminal by the base station.

The specific signal is generated according to an index number of a cell served by the base station. For example, a sequence initial value is generated according to the index number of the cell, and the sequence of the specific signal is generated according to the sequence initial value. For example, the cell index number is mapped to the sequence of the specific signal.

The specific signal is generated according to an identifier of the first network element. For example, the identifier of the first network element is mapped to the sequence of the specific signal, wherein the base station indicates the identifier of the first network element to the terminal.

The base station configures an integer for the specific signal, and the specific signal is generated according to the integer. For example, the base station indicates one integer to the terminal, and the specific signal is obtained by mapping the integer.

The specific signal contains identifier information of a user terminal (UE), so that the first network element recognizes the UE after detecting the specific signal, and marks the UE with the identifier.

In the present embodiment, the signal of the base station may directly reach the terminal, and the terminal may transmit the signal in the specific form on the specific channel based on information of the base station, which may bring convenience for the terminal to transmit the specific signal on the specific channel. For example, based on the information of the base station, the specific channel is flexibly indicated, and the signal in the specific form is flexibly indicated. For example, the specific channel or the signal in the specific form is indicated by the information of the base station, to avoid collision between signals in specific forms transmitted by different terminals, so as to avoid interference between each other and avoid misjudgment of an acknowledgment signal by the terminal.

Some embodiments of the present disclosure relate to a wireless network communication method, which includes the following operation 201.

At operation 201, a mobile terminal establishes a link with a first network element, including: a signal in a specific form is detected on a specific channel, wherein the link is used by the first network element to relay a signal between the mobile terminal and a second network element, and the signal in the specific form is transmitted by the first network element.

That is to say, the operation that the mobile terminal establishes the link with the first network element includes: the mobile terminal detects the signal in the specific form on the specific channel; and the first network element relays a signal between the mobile terminal and the second network element according to the link. For example, the mobile terminal detects the signal in the specific form on the specific channel, so as to recognize the first network element. For example, the position of the first network element relative to the mobile terminal is recognized, or electromagnetic wave ripple characteristics of signals to and from the mobile terminal and the first network element are recognized, or beams of the first network element which are aligned with the mobile terminal are recognized, or other characteristics of the mobile terminal relative to the first network element are recognized. The first network element relays the signal between the mobile terminal and the second network element according to the link. For example, the first network element relays the signal between the mobile terminal and the second network element according to characteristics of the mobile terminal relative to the first network element, the first network element relays the signal between the mobile terminal and the second network element according to the position of the first network element relative to the mobile terminal, the first network element relays the signal between the mobile terminal and the second network element according to the electromagnetic wave ripple characteristics of signals to and from the mobile terminal, the first network element relays the signal between the mobile terminal and the second network element according to the beams aligned with the mobile terminal, the first network element relays the signal between the mobile terminal and the second network element according to the specific channel used by the mobile terminal, and/or the first network element relays the signal between the mobile terminal and the second network element according to the signal in the specific form used by the mobile terminal. The link may be based on that the first network element recognizes the mobile terminal, or the mobile terminal recognizes the first network element. The mobile terminal transmits the recognition on the first network element back to the first network element, and the first network element can relay the signal between the mobile terminal and the second network element according to the recognition of the first network element by the mobile terminal. The first network element relays the signal between the mobile terminal and the second network element according to the link.

In an example, the specific channel satisfies at least one of the following conditions: the specific channel is selected by the first network element from a plurality of pre-defined channels; a time window of the specific channel is determined according to a type of the mobile terminal or a length of the signal in the specific form; a frequency domain start position or a frequency domain center position of the specific channel is determined according to the type of the first network element; the frequency domain start position of the specific channel is determined according to a value of a start symbol of the signal in the specific form; a frequency domain range of the specific channel is determined according to the type of the mobile terminal or the length of the signal in the specific form; a frequency domain spacing of the specific channel is determined according to the type of the mobile terminal; a sub-carrier spacing of the specific channel is determined according to a carrier frequency; and a start sub-carrier of the specific channel is determined according to the carrier frequency. The specific channel and the signal in the specific form may be determined by the mobile terminal, and may alternatively be determined by the first network element.

In an example, the signal in the specific form satisfies at least one of the following conditions: a composition structure of the signal in the specific form is determined according to a type of the mobile terminal; a sequence of the signal in the specific form is determined according to the type of the mobile terminal or a frequency domain position of the specific channel; the length of the signal in the specific form is determined according to the frequency domain range of the specific channel or the time window range of the specific channel; a length of a preamble portion of the signal in the specific form is determined according to the type of the mobile terminal; the signal in the specific form contains identifier information of the first network element; and the signal in the specific form contains identifier information of a cell of the second network element.

In an example, as shown in Fig. 3, after the mobile terminal transmits the signal in the specific form on the specific channel, the method may further include the following operation 202.

At operation 202, the mobile terminal sends acknowledgment information to the first network element, wherein the acknowledgment information sent by the mobile terminal is used for acknowledging that the mobile terminal has detected the signal in the specific form or has detected the first network element.

In some exemplary implementations, the acknowledgment information sent by the mobile terminal satisfies at least one of the following conditions: the acknowledgment information sent by the mobile terminal contains identifier information of the mobile terminal; the acknowledgment information sent by the mobile terminal contains identifier information of the first network element; the acknowledgment information sent by the mobile terminal is another signal sent in the specific form; the acknowledgment information sent by the mobile terminal is a signal transmitted in a form of a message; the acknowledgment information sent by the mobile terminal is a signal transmitted in a form of a signaling; the acknowledgment information sent by the mobile terminal is a signal transmitted via a dedicated channel; and the acknowledgment information sent by the mobile terminal is a signal transmitted via a channel customized for the mobile terminal.

In an example, the wireless network communication method may further include: the mobile terminal sends first request information to the first network element, wherein the first request information is used for representing that the mobile terminal requests the first network element to enable a service for the mobile terminal or disable a service for the mobile terminal.

In some exemplary implementations, the first request information and the acknowledgment information sent by the mobile terminal are contained in the same signal and sent to the first network element, or the first request information and the acknowledgment information sent by the mobile terminal are contained in different signals, and the different signals are separately transmitted to the first network element.

The service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element sends position information of the mobile terminal to the second network element; the first network element sends the position information of the mobile terminal to the mobile terminal; and the first network element provides an emergency call for the mobile terminal.

In an example, after the mobile terminal sends the first request information to the first network element, the method may further include: the mobile terminal receives first response information sent by the first network element, wherein the first response information is used for representing that the first network element accepts a request of the mobile terminal or rejects the request of the mobile terminal.

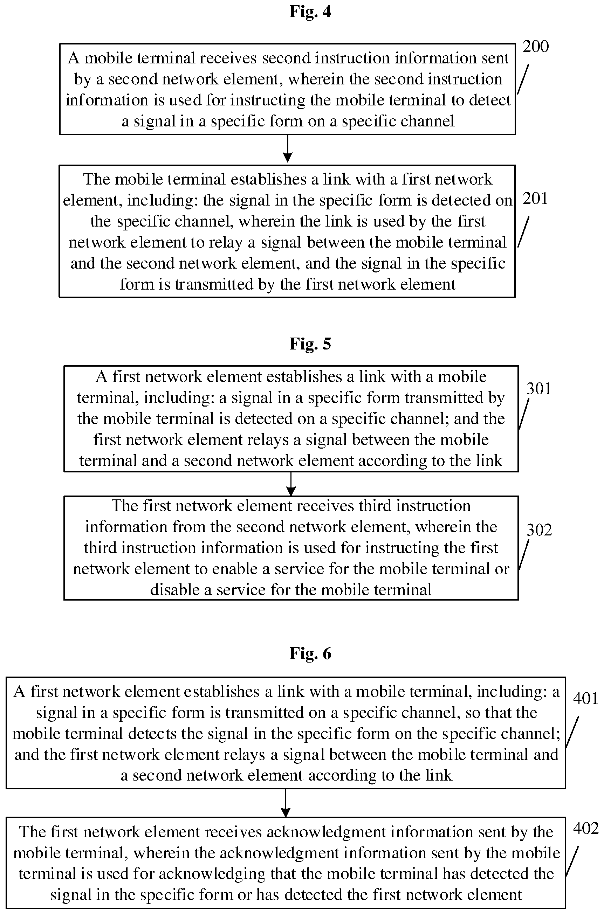

In an example, as shown in Fig. 4, after the mobile terminal detects the signal in the specific form on the specific channel, the method may further include the following operation 200.

At operation 200, the mobile terminal receives second instruction information sent by the second network element, wherein the second instruction information is used for instructing the mobile terminal to detect the signal in the specific form on the specific channel.

In some exemplary implementations, the specific channel satisfies at least one of the following conditions: the specific channel is selected by the second network element from the plurality of pre-defined channels; the time window of the specific channel is specified by the second network element; the frequency domain position of the specific channel is specified by the second network element; the frequency domain range of the specific channel is specified by the second network element; and a start time of the specific channel is determined by the second network element according to a half-frame time where a cell synchronization signal block is located.

The signal in the specific form satisfies at least one of the following conditions: a sequence of the signal in the specific form is determined by the second network element according to an index number of a cell served by the second network element or identifier information of the first network element, wherein the identifier information of the first network element is notified by the second network element to the mobile terminal; the sequence of the signal in the specific form is determined by the second network element according to an integer configured by the second network element for the mobile terminal, wherein the integer and the sequence have a mapping relationship; and the signal in the specific form contains identifier information of the mobile terminal.

Some embodiments of the present disclosure relate to a wireless network communication method, which includes the following operation 301.

At operation 301, a first network element establishes a link with a mobile terminal, including: a signal in a specific form transmitted by the mobile terminal is detected on a specific channel; and the first network element relays a signal between the mobile terminal and a second network element according to the link.

In some exemplary implementations, the wireless network communication method of the present embodiment is performed by the first network element. The specific channel satisfies at least one of the following conditions: the specific channel is selected by the mobile terminal from a plurality of pre-defined channels; a time window length of the specific channel is determined according to the type of a relay node (i.e., the first network element) or the length of the signal in the specific form; a frequency domain start position or a frequency domain center position of the specific channel is determined according to the type of the relay node (i.e., the first network element) or a value of a start symbol of the signal in the specific form; the frequency domain start position of the specific channel is determined according to the value of the start symbol of the signal in the specific form; a frequency domain range of the specific channel is determined according to the type of the relay node (i.e., the first network element) or the length of the signal in the specific form; a frequency domain spacing of the specific channel is determined according to the type of the relay node (i.e., the first network element); a sub-carrier spacing of the specific channel is determined according to a carrier frequency; a start sub-carrier of the specific channel is determined according to the carrier frequency; the specific channel is selected by the second network element from the plurality of pre-defined channels, wherein the second network element indicates the mobile terminal to transmit the signal in the specific form on the specific channel; the time window of the specific channel is specified by the second network element, wherein the second network element indicates the mobile terminal to transmit the signal in the specific form on the specific channel; the frequency domain position of the specific channel is specified by the second network element, wherein the second network element indicates the mobile terminal to transmit the signal in the specific form on the specific channel; the frequency domain range of the specific channel is specified by the second network element, wherein the second network element indicates the mobile terminal to transmit the signal in the specific form on the specific channel; and a start time of the specific channel is determined by a half-frame time of a synchronization signal block of a cell where the second network element is located, wherein the second network element indicates the mobile terminal to transmit the signal in the specific form on the specific channel.

The signal in the specific form satisfies at least one of the following conditions: a composition structure of the signal in the specific form is determined according to a type of the first network element; a type of the signal in the specific form is determined according to a type of the mobile terminal; a sequence of the signal in the specific form is determined according to the type of the first network element or a frequency domain position of the specific channel; a length of the signal in the specific form is determined according to a frequency domain range of the specific channel or a time window of the specific channel; a length of a preamble portion of the signal in the specific form is determined according to the type of the first network element; the signal in the specific form contains identifier information of the mobile terminal; and the signal in the specific form contains capability information of the mobile terminal, the sequence of the signal in the specific form is determined by the second network element according to an index number of a cell served by the second network element or identifier information of the first network element, wherein the identifier information of the first network element is notified by the second network element to the mobile terminal; the sequence of the signal in the specific form is determined by the second network element according to an integer configured by the second network element for the mobile terminal, wherein the integer and the sequence have a mapping relationship; and the signal in the specific form contains identifier information of the mobile terminal.

The specific channel and the signal in the specific form may be determined by the mobile terminal, and may alternatively be determined by the first network element.

In an example, after the first network element detects the signal in the specific form transmitted by the mobile terminal on the specific channel, the method may further include at least one of the following operations: the first network element sends acknowledgment information to the second network element; and the first network element sends acknowledgment information to the mobile terminal, wherein the acknowledgment information sent by the first network element is used for acknowledging that the first network element has detected the signal in the specific form or has detected the mobile terminal.

In some exemplary implementations, the acknowledgment information sent by the first network element satisfies at least one of the following conditions: the acknowledgment information sent by the first network element contains identifier information of the first network element; and the acknowledgment information sent by the first network element contains identifier information of the mobile terminal.

In an example, as shown in Fig. 5, after the first network element detects the signal in the specific form transmitted by the mobile terminal on the specific channel, the method may further include the following operation 302.

At operation 302, the first network element receives third instruction information from the second network element, wherein the third instruction information is used for instructing the first network element to enable a service for the mobile terminal or disable a service for the mobile terminal.

In some exemplary implementations, the service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element sends position information of the mobile terminal to the second network element; the first network element sends the position information of the mobile terminal to the mobile terminal; and the first network element provides an emergency call for the mobile terminal.

In an example, the wireless network communication method may further include: the first network element receives first request information sent by the mobile terminal, wherein the first request information is used for representing that the mobile terminal requests the first network element to enable a service for the mobile terminal or disable a service for the mobile terminal.

In some exemplary implementations, the first request information is contained in the signal in the specific form transmitted by the mobile terminal, or the first request information is contained in another signal different from the signal in the specific form transmitted by the mobile terminal, and said another signal is separately transmitted to the first network element.

After the first network element receives the first request information sent by the mobile terminal, the method may further include: the first network element sends first response information to the mobile terminal, wherein the first response information is used for representing that the first network element accepts a request of the mobile terminal or rejects the request of the mobile terminal.

In an example, after the first network element detects the signal in the specific form transmitted by the mobile terminal on the specific channel, the method may further include: the relay node (i.e., the first network element) sends acknowledgment information to the mobile terminal, wherein the acknowledgment information sent by the relay node (i.e., the first network element) is used for indicating that the relay node (i.e., the first network element) has detected the signal in the specific form or has detected the mobile terminal.

In some exemplary implementations, the first response information and the acknowledgment information sent by the first network element are contained in the same signal and sent to the mobile terminal, or the first response information and the acknowledgment information sent by the first network element are contained in different signals, and the different signals are separately transmitted to the mobile terminal.

In an example, after the first network element detects the signal in the specific form transmitted by the mobile terminal on the specific channel, the method may further include: the first network element receives fourth instruction information sent by the second network element, wherein the fourth instruction information is used for instructing the first network element to detect the signal in the specific form on the specific channel.

Some embodiments of the present disclosure relate to a wireless network communication method, which includes the following operation 401.

At operation 401, a first network element establishes a link with a mobile terminal, including: a signal in a specific form is transmitted on a specific channel, so that the mobile terminal detects the signal in the specific form on the specific channel; and the first network element relays a signal between the mobile terminal and a second network element according to the link.

In some exemplary implementations, the specific channel satisfies at least one of the following conditions: the specific channel is selected by the first network element from a plurality of pre-defined channels; a time window of the specific channel is determined according to a type of the mobile terminal or a length of the signal in the specific form; a frequency domain start position or a frequency domain center position of the specific channel is determined according to the type of the mobile terminal; the frequency domain start position of the specific channel is determined according to a value of a start symbol of the signal in the specific form; a frequency domain range of the specific channel is determined according to the type of the mobile terminal or the length of the signal in the specific form; a frequency domain spacing of the specific channel is determined according to the type of the mobile terminal; a sub-carrier spacing of the specific channel is determined according to a carrier frequency; and a start sub-carrier of the specific channel is determined according to the carrier frequency.

The signal in the specific form satisfies at least one of the following conditions: a composition structure of the signal in the specific form is determined according to a type of the mobile terminal; a sequence of the signal in the specific form is determined according to the type of the mobile terminal or a frequency domain position of the specific channel; a length of the signal in the specific form is determined according to a frequency domain range of the specific channel or a time window of the specific channel; a length of a preamble portion of the signal in the specific form is determined according to the type of the mobile terminal; the signal in the specific form contains identifier information of the first network element; and the signal in the specific form contains identifier information of a cell of the second network element.

The specific channel and the signal in the specific form may be determined by the mobile terminal, and may alternatively be determined by the first network element.

In an example, as shown in Fig. 6, after the first network element transmits the signal in the specific form on the specific channel, the method may further include the following operation 402.

At operation 402, the first network element receives acknowledgment information sent by the mobile terminal, wherein the acknowledgment information sent by the mobile terminal is used for acknowledging that the mobile terminal has detected the signal in the specific form or has detected the first network element.

In some exemplary implementations, the acknowledgment information sent by the mobile terminal satisfies at least one of the following conditions: the acknowledgment information sent by the mobile terminal contains identifier information of the mobile terminal; the acknowledgment information sent by the mobile terminal contains identifier information of the first network element; the acknowledgment information sent by the mobile terminal is another signal sent in the specific form; the acknowledgment information sent by the mobile terminal is a signal transmitted in a form of a message; the acknowledgment information sent by the mobile terminal is a signal transmitted in a form of a signaling; the acknowledgment information sent by the mobile terminal is a signal transmitted via a dedicated channel; and the acknowledgment information sent by the mobile terminal is a signal transmitted via a channel customized for the mobile terminal.

In an example, the wireless network communication method may further include: the first network element receives first request information sent by the mobile terminal, wherein the first request information is used for representing that the mobile terminal requests the first network element to enable a service for the mobile terminal or disable a service for the mobile terminal.

In some exemplary implementations, the first request information and the acknowledgment information sent by the mobile terminal are contained in the same signal and sent to the relay node (i.e., the first network element), or the first request information and the acknowledgment information sent by the mobile terminal are contained in different signals, and the different signals are separately transmitted to the relay node (i.e., the first network element).

The service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element

sends position information of the mobile terminal to the second network element; the first network element sends the position information of the mobile terminal to the mobile terminal; and the first network element provides an emergency call for the mobile terminal.

In an example, after the first network element receives the first request information sent by the mobile terminal, the method may further include: the first network element sends first response information to the mobile terminal, wherein the first response information is used for representing that the first network element accepts a request of the mobile terminal or rejects the request of the mobile terminal.

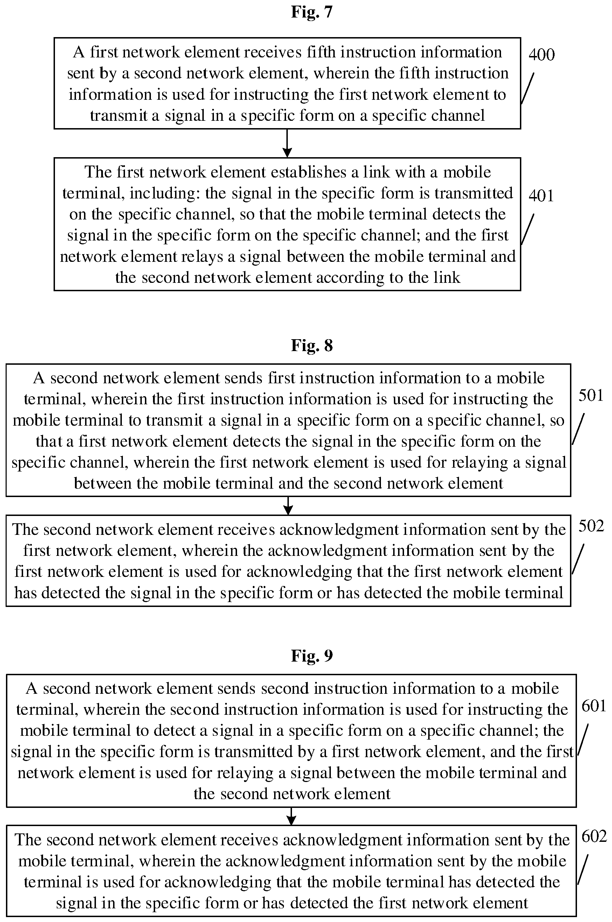

In an example, as shown in Fig. 7, after the first network element transmits the signal in the specific form on the specific channel, the method may further include the following operation 400.

At operation 400, the first network element receives fifth instruction information sent by the second network element, wherein the fifth instruction information is used for instructing the first network element to transmit the signal in the specific form on the specific channel.

In some exemplary implementations, the specific channel satisfies at least one of the following conditions: the specific channel is selected by the second network element from the plurality of pre-defined channels; the time window of the specific channel is specified by the second network element; the frequency domain position of the specific channel is specified by the second network element; the frequency domain range of the specific channel is specified by the second network element; and a start time of the specific channel is determined by a half-frame time of a synchronization signal block of a cell where the second network element is located.

The signal in the specific form satisfies at least one of the following conditions: a sequence of the signal in the specific form is determined by the second network element according to an index number of a cell served by the second network element or identifier information of the first network element, wherein the identifier information of the first network element is notified by the second network element to the mobile terminal; the sequence of the signal in the specific form is determined by the second network element according to an integer configured by the second network element for the mobile terminal, wherein the integer and the sequence have a mapping relationship; and the signal in the specific form contains identifier information of the mobile terminal.

In an example, the wireless network communication method may further include: the first network element receives third instruction information from the second network element, wherein the third instruction information is used for instructing the first network element to enable a service for the mobile terminal or disable a service for the mobile terminal.

In some exemplary implementations, the service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element sends position information of the mobile terminal to the second network element; the first network element sends the position information of the mobile terminal to the mobile terminal; and the first network element provides an emergency call for the mobile terminal.

In an example, the wireless network communication method may further include: the first network element receives first request information sent by the mobile terminal, wherein the first request information is used for representing that the mobile terminal requests the first network element to enable a service for the mobile terminal or disable a service for the mobile terminal.

In an example, after the first network element transmits the signal in the specific form on the specific channel, the method may further include: the relay node (i.e., the first network element) receives acknowledgment information sent by the mobile terminal, wherein the acknowledgment information sent by the mobile terminal is used for acknowledging that the mobile terminal has detected the signal in the specific form or has detected the relay node (i.e., the first network element).

In some exemplary implementations, the first request information and the acknowledgment information sent by the mobile terminal are contained in the same signal and sent to the first network element, or the first request information and the acknowledgment information sent by the mobile terminal are contained in different signals, and the different signals are separately transmitted to the first network element.

In an example, after the first network element receives the first request information sent by the mobile terminal, the method may further include: the first network element sends first response information to the mobile terminal, wherein the first response information is used for representing that the first network element accepts a request of the mobile terminal or rejects the request of the mobile terminal.

Some embodiments of the present disclosure relate to a wireless network communication method, which includes the following operation 501.

At operation 501, a second network element sends first instruction information to a mobile terminal, wherein the first instruction information is used for instructing the mobile terminal to transmit a signal in a specific form on a specific channel, so that a first network element detects the signal in the specific form on the specific channel, wherein the first network element is used for relaying a signal between the mobile terminal and the second network element.

In some exemplary implementations, the specific channel satisfies at least one of the following conditions: the specific channel is selected by the mobile terminal from a plurality of pre-defined channels; a time window of the specific channel is determined according to the type of the first network element or the length of the signal in the specific form; a frequency domain start position or a frequency domain center position of the specific channel is determined according to the type of the first network element; the frequency domain start position of the specific channel is determined according to a value of a start symbol of the signal in the specific form; a frequency domain range of the specific channel is determined according to the type of the first network element or the length of the signal in the specific form; a frequency domain spacing of the specific channel is determined according to the type of the first network element; a sub-carrier spacing of the specific channel is determined according to a carrier frequency; a start sub-carrier of the specific channel is determined according to the carrier frequency; the specific channel is selected by the second network element from the plurality of pre-defined channels; the time window of the specific channel is specified by the second network element; the frequency domain position of the specific channel is specified by the second network element; the frequency domain range of the specific channel is specified by the second network element; and a start time of the specific channel is determined by a half-frame time of a synchronization signal block of a cell where the second network element is located.

The signal in the specific form satisfies at least one of the following conditions: a composition structure of the signal in the specific form is determined according to a type of the first network element; a type of the signal in the specific form is determined according to a type of the mobile terminal; a sequence of the signal in the specific form is determined according to the type of the first network element or a frequency domain position of the specific channel; a length of the signal in the specific form is determined according to a frequency domain range of the specific channel or a time window of the specific channel; a length of a preamble portion of the signal in the specific form is determined according to the type of the first network element; the signal in the specific form contains identifier information of the mobile terminal; the signal in the specific form contains capability information of the mobile terminal; the sequence of the signal in the specific form is determined by the second network element according to an index number of a cell served by the second network element or identifier information of the first network element; the sequence of the signal in the specific form is determined by the second network element according to an integer configured by the second network element for the mobile terminal, wherein the integer and the sequence have a mapping relationship; and the signal in the specific form contains identifier information of the mobile terminal. The specific channel and the signal in the specific form may be determined by the mobile terminal, and may alternatively be determined by the first network element.

In an example, as shown in Fig. 8, the wireless network communication method may further include the following operation 502.

At operation 502, the second network element receives acknowledgment information sent by the first network element, wherein the acknowledgment information sent by the first network element is used for acknowledging that the first network element has detected the signal in the specific form or has detected the mobile terminal.

In some exemplary implementations, the acknowledgment information sent by the first network element satisfies at least one of the following conditions: the acknowledgment information sent by the first network element contains identifier information of the first network element; and the acknowledgment information sent by the first network element contains identifier information of the mobile terminal.

In an example, the wireless network communication method may further include: the second network element sends third instruction information to the first network element, wherein the third instruction information is used for instructing the first network element to enable a service for the mobile terminal or disable a service for the mobile terminal.

In an example, after the second network element sends the third instruction information to the first network element, the second network element further receives second response information sent by the first network element, wherein the second response information is used for representing that the first network element accepts an instruction of the second network element or rejects an instruction of the second network element.

In an example, the wireless network communication method may further include: the second network element receives acknowledgment information sent by the first network element, wherein the acknowledgment information sent by the first network element is used for acknowledging that the first network element has detected the signal in the specific form or has detected the mobile terminal.

In an example, the wireless network communication method may further include: the second network element receives second request information sent by the mobile terminal, wherein the second request information is used for representing that the mobile terminal requests the second network element to instruct the first network element to enable a service for the mobile terminal or disable a service for the mobile terminal.

In some exemplary implementations, the service includes at least one of the following functions: the first network element relays the signal sent by the mobile terminal to the second network element; the first network element relays the signal sent by the second network element to the mobile terminal; the first network element amplifies the signal sent by the mobile terminal and then relays same to the second network element; the first network element amplifies the signal sent by the second network element and then relays same to the mobile terminal; the first network element sends position information of the mobile terminal to the second network element; the first network element sends the position information of the mobile terminal to the mobile terminal; and the first network element provides an emergency call for the mobile terminal.

In an example, the wireless network communication method may further include: the second network element receives acknowledgment information sent by the mobile terminal, wherein the acknowledgment information sent by the mobile terminal is used for acknowledging that the first network element has detected the signal in the specific form or has detected the mobile terminal.

In some exemplary implementations, the second request information and the acknowledgment information sent by the mobile terminal are contained in the same signal and sent to the second network element, or the second request information and the acknowledgment information sent by the mobile terminal are contained in different signals, and the different signals are separately sent to the second network element.

In an example, after receiving the second request information sent by the mobile terminal, the second network element further sends third response information to the mobile terminal, wherein the third response information is used for representing that the second network element accepts a request of the mobile terminal or rejects the request of the mobile terminal.

Some embodiments of the present disclosure relate to a wireless network communication method, which includes the following operation 601.

At operation 601, a second network element sends second instruction information to a mobile terminal, wherein the second instruction information is used for instructing the mobile terminal to detect a signal in a specific form on a specific channel; the signal in the specific form is transmitted by a first network element, and the first network element is used for relaying a signal between the mobile terminal and the second network element.

In some exemplary implementations, the specific channel satisfies at least one of the following conditions: the specific channel is selected by the first network element from a plurality of pre-defined channels; a time window of the specific channel is determined according to a type of the mobile terminal or a length of the signal in the specific form; a frequency domain start position or a frequency domain center position of the specific channel is determined according to the type of the first network element; the frequency domain start position of the specific channel is determined according to a value of a start symbol of the signal in the specific form; a frequency domain range of the specific channel is determined according to the type of the mobile terminal or the length of the signal in the specific form; a frequency domain spacing of the specific channel is determined according to the type of the mobile terminal; a sub-carrier spacing of the specific channel is determined according to a carrier frequency; a start sub-carrier of the specific channel is determined according to the carrier frequency; the specific channel is selected by the second network element from the plurality of pre-defined channels; the time window of the specific channel is specified by the second network element; the frequency domain position of the specific channel is specified by the second network element; the frequency domain range of the specific channel is specified by the second network element; and a start time of the specific channel is determined by the second network element according to a half-frame time where a cell synchronization signal block is located.

The signal in the specific form satisfies at least one of the following conditions: a composition structure of the signal in the specific form is determined according to a type of the mobile terminal; a sequence of the signal in the specific form is determined according to the type of the mobile terminal or a frequency domain position of the specific channel; the length of the signal in the specific form is determined according to the frequency domain range of the specific channel or the time window range of the specific channel; a length of a preamble portion of the signal in the specific form is determined according to the type of the mobile terminal; the signal in the specific form contains identifier information of the first network element; and the signal in the specific form contains identifier information of a cell of the second network element; the sequence of the signal in the specific form is determined by the second network element according to an index number of a cell served by the second network element or identifier information of the first network element, wherein the identifier information of the first network element is notified by the second network element to the mobile terminal; the sequence of the signal in the specific form is determined by the second network element according to an integer configured by the second network element for the mobile terminal, wherein the integer and the sequence have a mapping relationship; and the signal in the specific form contains identifier information of the mobile terminal. The specific channel and the signal in the specific form may be determined by the mobile terminal, and may alternatively be determined by the first network element.

In an example, as shown in Fig. 9, the wireless network communication method may further include the following operation 602.

At operation 602, the second network element receives acknowledgment information sent by the mobile terminal, wherein the acknowledgment information sent by the mobile terminal is used for acknowledging that the mobile terminal has detected the signal in the specific form or has detected the first network element.

In some exemplary implementations, the acknowledgment information sent by the mobile terminal satisfies at least one of the following conditions: the acknowledgment information sent by the mobile terminal contains identifier information of the mobile terminal; and the acknowledgment information sent by the mobile terminal contains identifier information of the first network element;

In an example, the wireless network communication method may further include: the second network element sends third instruction information to the first network element, wherein the third instruction information is used for instructing the first network element to enable a service for the mobile terminal or disable a service for the mobile terminal.

In some exemplary implementations, the service includes at least one of the following functions: a relay node (i.e., the first network element) relays the signal sent by the mobile terminal to the second network element; the relay node (i.e., the first network element) amplifies the signal sent by the second network element and then relays same to the mobile terminal; the relay node (i.e., the first network element) amplifies the signal sent by the mobile terminal and then relays same to the second network element; the relay node (i.e., the first network element) amplifies the signal sent by the second network element and then relays same to the mobile terminal; the relay node (i.e., the first network element) sends position information of the mobile terminal to the second network element; the relay node (i.e., the first network element) sends the position information of the mobile terminal to the mobile terminal; and the relay node (i.e., the first network element) provides an emergency call for the mobile terminal.

In an example, the wireless network communication method may further include: the second network element receives second request information sent by the mobile terminal, wherein the second request information is used for representing that the mobile terminal requests the second network element to instruct the first network element to enable a service for the mobile terminal or disable a service for the mobile terminal.

In an example, the wireless network communication method may further include: the second network element receives acknowledgment information sent by the mobile terminal, wherein the acknowledgment information sent by the mobile terminal is used for acknowledging that the mobile terminal has detected the signal in the specific form or has detected the relay node (i.e., the first network element).

In some exemplary implementations, the second request information and the acknowledgment information sent by the mobile terminal are contained in the same signal and sent to the second network element, or the second request information and the acknowledgment information sent by the mobile terminal are contained in different signals, and the different signals are separately sent to the second network element.

In an example, after the second network element receives the second request information sent by the mobile terminal, the method may further include: the second network element sends third response information to the mobile terminal, wherein the third response information is used for representing that the second network element accepts a request of the mobile terminal or rejects the request of the mobile terminal.

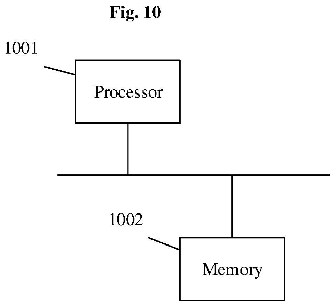

Some other embodiments of the present disclosure relate to an electronic device, as shown in Fig. 10, including: at least one processor 1001; and a memory 1002 in communication connection with the at least one processor 1001, wherein the memory 1002 stores instructions executable by the at least one processor 1001, the instructions, when executed by the at least one processor 1001, cause the at least one processor 1001 to execute the wireless network communication methods in various embodiments as described above

The memory and the processor are connected via a bus, the bus may include any number of interconnected buses and bridges, and the bus connects various circuits of the one or more processors and the memory together. The bus may also connect a variety of other circuits, such as peripheral devices, voltage regulators and power management circuits, which are well known in the art and therefore will not be further repeated herein. A bus interface provides an interface between the bus and a transceiver. The transceiver may be one element or multiple elements, such as multiple receivers and transmitters, that provide a unit for communicating with various other apparatuses over a transmission medium. Data processed by the processor is transmitted on a wireless medium through an antenna, and further, the antenna also receives the data and transmits the data to the processor.

The processor is responsible for managing the buses and general processing, and can further provide various functions, including timing, peripheral interfaces, voltage regulation, power management and other control functions. And the memory may be used to store data used by the processor in executing operations.

Some other embodiments of the present disclosure relate to a computer-readable storage medium, which stores a computer program. The computer program, when executed by a processor, causes the processor to execute the method embodiments as described above.

That is, a person having ordinary skill in the art would understand that all or some of the operations in the methods in the embodiments as described above may be implemented by a program instructing relevant hardware, and the program is stored in a storage medium, the storage medium including several instructions for enabling a device (which may be a single chip microcomputer, a chip, etc.) or a processor to execute all or some of the operations of the methods in various embodiments of the present disclosure. Moreover, the storage medium above includes: media such as a USB flash disk, a mobile hard disk, a Read-Only Memory (ROM), a Random Access Memory (RAM), a magnetic disk, or an optical disk, and the like which can store program codes.

A person having ordinary skill in the art may understand that the embodiments as described above are specific embodiments for implementing the present disclosure, and in practical applications, various changes may be made in form and details without departing from the principle and scope of the present disclosure.

**Claims**

1. A wireless network communication method, comprising:

   establishing, by a mobile terminal, a link with a first network element, wherein establishing, by the mobile terminal, the link with the first network element comprises: transmitting a signal in a specific form on a specific channel, so that the first network element detects the signal in the specific form on the specific channel, wherein the link is used by the first network element to relay a signal between the mobile terminal and a second network element.

2. The wireless network communication method according to claim 1, wherein the specific channel satisfies at least one of the following conditions:

   the specific channel is selected by the mobile terminal from a plurality of pre-defined channels;
   a time window of the specific channel is determined according to a type of the first network element or a length of the signal in the specific form;
   a frequency domain start position or a frequency domain center position of the specific channel is determined according to the type of the first network element;
   the frequency domain start position of the specific channel is determined according to a value of a start symbol of the signal in the specific form;
   a frequency domain range of the specific channel is determined according to the type of the first network element or the length of the signal in the specific form;
   a frequency domain spacing of the specific channel is determined according to the type of the first network element;
   a sub-carrier spacing of the specific channel is determined according to a carrier frequency; and
   a start sub-carrier of the specific channel is determined according to the carrier frequency.

3. The wireless network communication method according to claim 1 or 2, wherein the signal in the specific form satisfies at least one of the following conditions:

   a composition structure of the signal in the specific form is determined according to a type of the first network element;
   a type of the signal in the specific form is determined according to a type of the mobile terminal;
   a sequence of the signal in the specific form is determined according to the type of the first network element or a frequency domain position of the specific channel;
   a length of the signal in the specific form is determined according to a frequency domain range of the specific channel or a time window of the specific channel;
   a length of a preamble portion of the signal in the specific form is determined according to the type of the first network element;
   the signal in the specific form contains identifier information of the mobile terminal; and
   the signal in the specific form contains capability information of the mobile terminal.

4. The wireless network communication method according to any one of claims 1-3, wherein after transmitting, by the mobile terminal, the signal in the specific form on the specific channel, the method further comprises:
   receiving, by the mobile terminal, acknowledgment information sent by the first network element, wherein the acknowledgment information sent by the first network element is used for acknowledging that the first network element has detected the signal in the specific form or has detected the mobile terminal.

5. The wireless network communication method according to claim 4, wherein the acknowledgment information sent by the first network element satisfies at least one of the following conditions:

   the acknowledgment information sent by the first network element contains identifier information of the first network element;
   the acknowledgment information sent by the first network element contains identifier information of the mobile terminal;
   the acknowledgment information sent by the first network element is another signal transmitted in the specific form;
   the acknowledgment information sent by the first network element is a signal transmitted in a form of a message;
   the acknowledgment information sent by the first network element is a signal transmitted in a form of a signaling;
   the acknowledgment information sent by the first network element is a signal transmitted via a dedicated channel;
   first acknowledgment information sent by the first network element is a signal transmitted via a channel customized for the mobile terminal; and

the first acknowledgment information sent by the first network element is a signal transmitted via a broadcast channel.

6. The wireless network communication method according to any one of claims 1-5, wherein the method further comprises:
sending, by the mobile terminal, first request information to the first network element, wherein the first request information is used for representing that the mobile terminal requests the first network element to enable a service for the mobile terminal or disable a service for the mobile terminal.

7. The wireless network communication method according to claim 6, wherein the first request information is contained in the signal in the specific form transmitted by the mobile terminal, or the first request information is contained in another signal different from the signal in the specific form transmitted by the mobile terminal, and said another signal is separately transmitted to the first network element.

8. The wireless network communication method according to claim 6, wherein after sending, by the mobile terminal, the first request information to the first network element, the method further comprises:
receiving, by the mobile terminal, first response information sent by the first network element, wherein the first response information is used for representing that the first network element accepts a request of the mobile terminal or rejects the request of the mobile terminal.

9. The wireless network communication method according to claim 8, wherein after transmitting, by the mobile terminal, the signal in the specific form on the specific channel, the method further comprises:
receiving, by the mobile terminal, acknowledgment information sent by the first network element, wherein the acknowledgment information sent by the first network element is used for acknowledging that the first network element has detected the signal in the specific form or has detected the mobile terminal.

10. The wireless network communication method according to claim 9, wherein the first response information and the acknowledgment information sent by the first network element are contained in the same signal and sent to the mobile terminal, or the first response information and the acknowledgment information sent by the first network element are contained in different signals, and the different signals are separately transmitted to the mobile terminal.

11. The wireless network communication method according to any one of claims 6-10, wherein the service comprises at least one of:

relaying, by the first network element, the signal sent by the mobile terminal to the second network element;

relaying, by the first network element, the signal sent by the second network element to the mobile terminal;

amplifying, by the first network element, the signal sent by the mobile terminal, and then relaying the amplified signal to the second network element;

amplifying, by the first network element, the signal sent by the second network element, and then relaying the amplified signal to the mobile terminal;

sending, by the first network element, position information of the mobile terminal to the second network element;

sending, by the first network element, the position information of the mobile terminal to the mobile terminal; and

providing, by the first network element, an emergency call for the mobile terminal.

12. The wireless network communication method according to claim 1, wherein before transmitting, by the mobile terminal, the signal in the specific form on the specific channel, the method further comprises:
receiving, by the mobile terminal, first instruction information sent by the second network element, wherein the first instruction information is used for instructing the mobile terminal to transmit the signal in the specific form on the specific channel.

13. The wireless network communication method according to claim 12, wherein the specific channel satisfies at least one of the following conditions:

the specific channel is selected by the second network element from a plurality of pre-defined channels;

a time window of the specific channel is specified by the second network element;

a frequency domain position of the specific channel is specified by the second network element;

a frequency domain range of the specific channel is specified by the second network element; and

a start time of the specific channel is determined by a half-frame time of a synchronization signal block of a cell where the second network element is located.

14. The wireless network communication method according to claim 12, wherein the signal in the specific form satisfies at least one of the following conditions:

a sequence of the signal in the specific form is determined by the second network element according to an index number of a cell served by the second network element or identifier information of the first network element, wherein the identifier information of the first network element is notified by the second network element to the mobile terminal;

the sequence of the signal in the specific form is determined by the second network element according to an integer configured by the second network element for the mobile terminal, wherein the integer and the sequence have a mapping relationship; and

the signal in the specific form contains identifier information of the mobile terminal.

15. A wireless network communication method, comprising:
establishing, by a mobile terminal, a link with a first network element, wherein establishing, by the mobile terminal, the link with the first network element comprises: detecting a signal in a specific form on a specific channel, wherein the link is used by the first network element to relay a signal between the mobile terminal and a second network element, and the signal in the specific form is transmitted by the first network element.

16. The wireless network communication method according to claim 15, wherein the specific channel satisfies at least one of the following conditions:

the specific channel is selected by the first network element from a plurality of pre-defined channels;

a time window of the specific channel is determined according to a type of the mobile terminal or a length of the signal in the specific form;

a frequency domain start position or a frequency domain center position of the specific channel is determined according to the type of the first network element;

the frequency domain start position of the specific channel is determined according to a value of a start symbol of the signal in the specific form;

a frequency domain range of the specific channel is determined according to the type of the mobile terminal or the length of the signal in the specific form;

a frequency domain spacing of the specific channel is determined according to the type of the mobile terminal;

a sub-carrier spacing of the specific channel is determined according to a carrier frequency;

and

a start sub-carrier of the specific channel is determined according to the carrier frequency.

17. The wireless network communication method according to claim 15 or 16, wherein the signal in the specific form satisfies at least one of the following conditions:

a composition structure of the signal in the specific form is determined according to a type of the mobile terminal;

a sequence of the signal in the specific form is determined according to the type of the mobile terminal or a frequency domain position of the specific channel;

a length of the signal in the specific form is determined according to a frequency domain range of the specific channel or a time window range of the specific channel;

a length of a preamble portion of the signal in the specific form is determined according to the type of the mobile terminal;

the signal in the specific form contains identifier information of the first network element; and

the signal in the specific form contains identifier information of a cell of the second network element.

18. The wireless network communication method according to any one of claims 15-17, wherein after detecting, by the mobile terminal, the signal in the specific form on the specific channel, the method further comprises:
sending, by the mobile terminal, acknowledgment information to the first network element, wherein the acknowledgment information sent by the mobile terminal is used for acknowledging that the mobile terminal has detected the signal in the specific form or has detected the first network element.

19. The wireless network communication method according to claim 18, wherein the acknowledgment information sent by the mobile terminal satisfies at least one of the following conditions:

the acknowledgment information sent by the mobile terminal contains identifier information of the mobile terminal;

the acknowledgment information sent by the mobile terminal contains identifier information of the first network element;

the acknowledgment information sent by the mobile terminal is another signal sent in the specific form;

the acknowledgment information sent by the mobile terminal is a signal transmitted in a form of a message;

the acknowledgment information sent by the mobile terminal is a signal transmitted in a form of a signaling;

the acknowledgment information sent by the mobile terminal is a signal transmitted via a dedicated channel; and

the acknowledgment information sent by the mobile terminal is a signal transmitted via a channel customized for the mobile terminal.

20. The wireless network communication method according to claim 18, wherein the method further comprises:

sending, by the mobile terminal, first request information to the first network element, wherein the first request information is used for representing that the mobile terminal requests the first network element to enable a service for the mobile terminal or disable a service for the mobile terminal.

21. The wireless network communication method according to claim 20, wherein the first request information and the acknowledgment information sent by the mobile terminal are contained in the same signal and sent to the first network element, or the first request information and the acknowledgment information sent by the mobile terminal are contained in different signals, and the different signals are separately transmitted to the first network element.

22. The wireless network communication method according to claim 20, wherein after sending, by the mobile terminal, the first request information to the first network element, the method further comprises:

receiving, by the mobile terminal, first response information sent by the first network element, wherein the first response information is used for representing that the first network element accepts a request of the mobile terminal or rejects the request of the mobile terminal.

23. The wireless network communication method according to claim 20, wherein the service comprises at least one of:

relaying, by the first network element, the signal sent by the mobile terminal to the second network element;

relaying, by the first network element, the signal sent by the second network element to the mobile terminal;

amplifying, by the first network element, the signal sent by the mobile terminal, and then relaying the amplified signal to the second network element;

amplifying, by the first network element, the signal sent by the second network element, and then relaying the amplified signal to the mobile terminal;

sending, by the first network element, position information of the mobile terminal to the second network element;

sending, by the first network element, the position information of the mobile terminal to the mobile terminal; and

providing, by the first network element, an emergency call for the mobile terminal.

24. The wireless network communication method according to claim 15, wherein before detecting, by the mobile terminal, the signal in the specific form on the specific channel, the method further comprises:

receiving, by the mobile terminal, second instruction information sent by the second network element, wherein the second instruction information is used for instructing the mobile terminal to detect the signal in the specific form on the specific channel.

25. The wireless network communication method according to claim 24, wherein the specific channel satisfies at least one of the following conditions:

the specific channel is selected by the second network element from a plurality of pre-defined channels;

a time window of the specific channel is specified by the second network element;

a frequency domain position of the specific channel is specified by the second network element;

a frequency domain range of the specific channel is specified by the second network element; and

a start time of the specific channel is determined by the second network element according to a half-frame time where a cell synchronization signal block is located.

26. The wireless network communication method according to claim 24, wherein the signal in the specific form satisfies at least one of the following conditions:

a sequence of the signal in the specific form is determined by the second network element according to an index number of a cell served by the second network element or identifier information of the first network element, wherein the identifier information of the first network element is notified by the second network element to the mobile terminal;

the sequence of the signal in the specific form is determined by the second network element according to an integer configured by the second network element for the mobile terminal, wherein the integer and the sequence have a mapping relationship; and

the signal in the specific form contains identifier information of the mobile terminal.

27. A wireless network communication method, comprising:
establishing, by a first network element, a link with a mobile terminal, wherein establishing, by the first network element, the link with the mobile terminal comprises: detecting, on a specific channel, a signal in a specific form transmitted by the mobile terminal; and relaying, by the first network element, a signal between the mobile terminal and a second network element according to the link.

28. The wireless network communication method according to claim 27, wherein the specific channel satisfies at least one of the following conditions:

the specific channel is selected by the mobile terminal from a plurality of pre-defined channels; a time window of the specific channel is determined according to a type of the first network element or a length of the signal in the specific form;
a frequency domain start position or a frequency domain center position of the specific channel is determined according to the type of the first network element;
the frequency domain start position of the specific channel is determined according to a value of a start symbol of the signal in the specific form;
a frequency domain range of the specific channel is determined according to the type of the first network element or the length of the signal in the specific form;
a frequency domain spacing of the specific channel is determined according to the type of the first network element;
a sub-carrier spacing of the specific channel is determined according to a carrier frequency;
a start sub-carrier of the specific channel is determined according to the carrier frequency;
the specific channel is selected by the second network element from the plurality of pre-defined channels, wherein the second network element indicates the mobile terminal to transmit the signal in the specific form on the specific channel;
the time window of the specific channel is specified by the second network element, wherein the second network element indicates the mobile terminal to transmit the signal in the specific form on the specific channel;
the frequency domain position of the specific channel is specified by the second network element, wherein the second network element indicates the mobile terminal to transmit the signal in the specific form on the specific channel;
the frequency domain range of the specific channel is specified by the second network element, wherein the second network element indicates the mobile terminal to transmit the signal in the specific form on the specific channel; and
a start time of the specific channel is determined by a half-frame time of a synchronization signal block of a cell where the second network element is located, wherein the second network element indicates the mobile terminal to transmit the signal in the specific form on the specific channel.

29. The wireless network communication method according to claim 27 or 28, wherein the signal in the specific form satisfies at least one of the following conditions:

a composition structure of the signal in the specific form is determined according to a type of the first network element;
a type of the signal in the specific form is determined according to a type of the mobile terminal;
a sequence of the signal in the specific form is determined according to the type of the first network element or a frequency domain position of the specific channel;
a length of the signal in the specific form is determined according to a frequency domain range of the specific channel or a time window of the specific channel;
a length of a preamble portion of the signal in the specific form is determined according to the type of the first network element;
the signal in the specific form contains identifier information of the mobile terminal;
the signal in the specific form contains capability information of the mobile terminal;
the sequence of the signal in the specific form is determined according to an index number of a cell served by the second network element or identifier information of the first network element, wherein the identifier information of the first network element is notified by the second network element to the mobile terminal;
the sequence of the signal in the specific form is determined according to an integer configured by the second network element for the mobile terminal, wherein the integer and the sequence have a mapping relationship; and
the signal in the specific form contains the identifier information of the mobile terminal.

30. The wireless network communication method according to any one of claims 27-29, wherein after detecting, by the first network element, the signal in the specific form transmitted by the mobile terminal on the specific channel, the method further comprises at least one of the following operations:

sending, by the first network element, acknowledgment information to the second network element; and

sending, by the first network element, acknowledgment information to the mobile terminal; wherein the acknowledgment information sent by the first network element is used for acknowledging that the first network element has detected the signal in the specific form or has detected the mobile terminal.

31. The wireless network communication method according to claim 30, wherein the acknowledgment information sent by the first network element satisfies at least one of the following conditions:

the acknowledgment information sent by the first network element contains identifier information of the first network element; and

the acknowledgment information sent by the first network element contains identifier information of the mobile terminal.

32. The wireless network communication method according to claim 27, wherein after detecting, by the first network element, the signal in the specific form transmitted by the mobile terminal on the specific channel, the method further comprises:

receiving, by the first network element, third instruction information of the second network element, wherein the third instruction information is used for instructing the first network element to enable a service for the mobile terminal or disable a service for the mobile terminal.

33. The wireless network communication method according to claim 27, wherein the method further comprises:

receiving, by the first network element, first request information sent by the mobile terminal, wherein the first request information is used for representing that the mobile terminal requests the first network element to enable a service for the mobile terminal or disable a service for the mobile terminal.

34. The wireless network communication method according to claim 33, wherein the first request information is contained in the signal in the specific form transmitted by the mobile terminal, or the first request information is contained in another signal different from the signal in the specific form transmitted by the mobile terminal, and said another signal is separately transmitted to the first network element.

35. The wireless network communication method according to claim 33, wherein after receiving, by the first network element, the first request information sent by the mobile terminal, the method further comprises:

prises:

sending, by the first network element, first response information to the mobile terminal, wherein the first response information is used for representing that the first network element accepts a request of the mobile terminal or rejects the request of the mobile terminal.

36. The wireless network communication method according to claim 35, wherein after detecting, by the first network element, the signal in the specific form transmitted by the mobile terminal on the specific channel, the method further comprises:

sending, by the first network element, acknowledgment information to the mobile terminal, wherein the acknowledgment information sent by the first network element is used for acknowledging that the first network element has detected the signal in the specific form or has detected the mobile terminal.

37. The wireless network communication method according to claim 36, wherein the first response information and the acknowledgment information sent by the first network element are contained in the same signal and sent to the mobile terminal, or the first response information and the acknowledgment information sent by the first network element are contained in different signals, and the different signals are separately transmitted to the mobile terminal.

38. The wireless network communication method according to any one of claims 32-37, wherein the service comprises at least one of:

relaying, by the first network element, the signal sent by the mobile terminal to the second network element;

relaying, by the first network element, the signal sent by the second network element to the mobile terminal;

amplifying, by the first network element, the signal sent by the mobile terminal, and then relaying the amplified signal to the second network element;

amplifying, by the first network element, the signal sent by the second network element, and then relaying the amplified signal to the mobile terminal;

sending, by the first network element, position information of the mobile terminal to the second network element;

sending, by the first network element, the position information of the mobile terminal to the mobile terminal; and

providing, by the first network element, an emergency call for the mobile terminal.

39. The wireless network communication method according to claim 27, wherein after detecting, by the first network element, the signal in the specific form transmitted by the mobile terminal on the specific channel, the method further comprises:
receiving, by the first network element, fourth instruction information sent by the second network element, wherein the fourth instruction information is used for instructing the first network element to detect the signal in the specific form on the specific channel.

40. A wireless network communication method, comprising:
establishing, by a first network element, a link with a mobile terminal, wherein establishing, by the first network element, the link with the mobile terminal comprises: transmitting a signal in a specific form on a specific channel, so that the mobile terminal detects the signal in the specific form on the specific channel; and relaying, by the first network element, a signal between the mobile terminal and a second network element according to the link.

41. The wireless network communication method according to claim 40, wherein the specific channel satisfies at least one of the following conditions:

the specific channel is selected by the first network element from a plurality of pre-defined channels;
a time window of the specific channel is determined according to a type of the mobile terminal or a length of the signal in the specific form;
a frequency domain start position or a frequency domain center position of the specific channel is determined according to the type of the mobile terminal;
the frequency domain start position of the specific channel is determined according to a value of a start symbol of the signal in the specific form;
a frequency domain range of the specific channel is determined according to the type of the mobile terminal or the length of the signal in the specific form;
a frequency domain spacing of the specific channel is determined according to the type of the mobile terminal;
a sub-carrier spacing of the specific channel is determined according to a carrier frequency; and
a start sub-carrier of the specific channel is determined according to the carrier frequency.

42. The wireless network communication method according to claim 40 or 41, wherein the signal in the specific form satisfies at least one of the following conditions:

a composition structure of the signal in the specific form is determined according to a type of the mobile terminal;
a sequence of the signal in the specific form is determined according to the type of the mobile terminal or a frequency domain position of the specific channel;
a length of the signal in the specific form is determined according to a frequency domain range of the specific channel or a time window of the specific channel;
a length of a preamble portion of the signal in the specific form is determined according to the type of the mobile terminal;
the signal in the specific form contains identifier information of the first network element; and
the signal in the specific form contains identifier information of a cell of the second network element.

43. The wireless network communication method according to any one of claims 40-42, wherein after transmitting, by the first network element, the signal in the specific form on the specific channel, the method further comprises:
receiving, by the first network element, acknowledgment information sent by the mobile terminal, wherein the acknowledgment information sent by the mobile terminal is used for acknowledging that the mobile terminal has detected the signal in the specific form or has detected the first network element.

44. The wireless network communication method according to claim 43, wherein the acknowledgment information sent by the mobile terminal satisfies at least one of the following conditions:

the acknowledgment information sent by the mobile terminal contains identifier information of the mobile terminal;
the acknowledgment information sent by the mobile terminal contains identifier information of the first network element;
the acknowledgment information sent by the mobile terminal is another signal sent in the specific form;
the acknowledgment information sent by the mobile terminal is a signal transmitted in a form of a message;
the acknowledgment information sent by the mobile terminal is a signal transmitted in a form of a signaling;
the acknowledgment information sent by the mobile terminal is a signal transmitted via a dedicated channel; and
the acknowledgment information sent by the mobile terminal is a signal transmitted via a channel customized for the mobile terminal.

**45.** The wireless network communication method according to claim 40, wherein the method further comprises:
receiving, by the first network element, first request information sent by the mobile terminal, wherein the first request information is used for representing that the mobile terminal requests the first network element to enable a service for the mobile terminal or disable a service for the mobile terminal.

**46.** The wireless network communication method according to claim 45, wherein the first request information and the acknowledgment information sent by the mobile terminal are contained in the same signal and sent to the first network element, or the first request information and the acknowledgment information sent by the mobile terminal are contained in different signals, and the different signals are separately transmitted to the first network element.

**47.** The wireless network communication method according to claim 45, wherein after receiving, by the first network element, the first request information sent by the mobile terminal, the method further comprises:
sending, by the first network element, first response information to the mobile terminal, wherein the first response information is used for representing that the first network element accepts a request of the mobile terminal or rejects the request of the mobile terminal.

**48.** The wireless network communication method according to claim 45, wherein the service comprises at least one of:

relaying, by the first network element, the signal sent by the mobile terminal to the second network element;
relaying, by the first network element, the signal sent by the second network element to the mobile terminal;
amplifying, by the first network element, the signal sent by the mobile terminal, and then relaying the amplified signal to the second network element;
amplifying, by the first network element, the signal sent by the second network element, and then relaying the amplified signal to the mobile terminal;
sending, by the first network element, position information of the mobile terminal to the second network element;
sending, by the first network element, the position information of the mobile terminal to the mobile terminal; and
providing, by the first network element, an emergency call for the mobile terminal.

**49.** The wireless network communication method according to claim 40, wherein after transmitting, by the first network element, the signal in the specific form on the specific channel, the method further comprises:
receiving, by the first network element, fifth instruction information sent by the second network element, wherein the fifth instruction information is used for instructing the first network element to transmit the signal in the specific form on the specific channel.

**50.** The wireless network communication method according to claim 49, wherein the specific channel satisfies at least one of the following conditions:

the specific channel is selected by the second network element from a plurality of pre-defined channels;
a time window of the specific channel is specified by the second network element;
a frequency domain position of the specific channel is specified by the second network element;
a frequency domain range of the specific channel is specified by the second network element; and
a start time of the specific channel is determined by a half-frame time of a synchronization signal block of a cell where the second network element is located.

**51.** The wireless network communication method according to claim 49, wherein the signal in the specific form satisfies at least one of the following conditions:

a sequence of the signal in the specific form is determined by the second network element according to an index number of a cell served by the second network element or identifier information of the first network element, wherein the identifier information of the first network element is notified by the second network element to the mobile terminal;
the sequence of the signal in the specific form is determined by the second network element according to an integer configured by the second network element for the mobile terminal, wherein the integer and the sequence have a mapping relationship; and
the signal in the specific form contains identifier information of the mobile terminal.

**52.** The wireless network communication method according to claim 40, wherein the method further comprises:
receiving, by the first network element, third instruction information of the second network element, wherein the third instruction information is used for instructing the first network element to enable a service for the mobile terminal or disable a service for the mobile terminal.

53. The wireless network communication method according to claim 40, wherein the method further comprises:

receiving, by the first network element, first request information sent by the mobile terminal, wherein the first request information is used for representing that the mobile terminal requests the first network element to enable a service for the mobile terminal or disable a service for the mobile terminal.

54. The wireless network communication method according to claim 53, wherein after transmitting, by the first network element, the signal in the specific form on the specific channel, the method further comprises:

receiving, by the first network element, acknowledgment information sent by the mobile terminal, wherein the acknowledgment information sent by the mobile terminal is used for acknowledging that the mobile terminal has detected the signal in the specific form or has detected the first network element.

55. The wireless network communication method according to claim 54, wherein the first request information and the acknowledgment information sent by the mobile terminal are contained in the same signal and sent to the first network element, or the first request information and the acknowledgment information sent by the mobile terminal are contained in different signals, and the different signals are separately transmitted to the first network element.

56. The wireless network communication method according to claim 53, wherein after receiving, by the first network element, the first request information sent by the mobile terminal, the method further comprises:

sending, by the first network element, first response information to the mobile terminal, wherein the first response information is used for representing that the first network element accepts a request of the mobile terminal or rejects the request of the mobile terminal.

57. The wireless network communication method according to any one of claims 52-56, wherein the service comprises at least one of:

relaying, by the first network element, the signal sent by the mobile terminal to the second network element;
relaying, by the first network element, the signal sent by the second network element to the mobile terminal;

amplifying, by the first network element, the signal sent by the mobile terminal, and then relaying the amplified signal to the second network element;
amplifying, by the first network element, the signal sent by the second network element, and then relaying the amplified signal to the mobile terminal;
sending, by the first network element, position information of the mobile terminal to the second network element;
sending, by the first network element, the position information of the mobile terminal to the mobile terminal; and
providing, by the first network element, an emergency call for the mobile terminal.

58. A wireless network communication method, comprising:

sending, by a second network element, first instruction information to a mobile terminal, wherein the first instruction information is used for instructing the mobile terminal to transmit a signal in a specific form on a specific channel, so that a first network element detects the signal in the specific form on the specific channel, wherein the first network element is used for relaying a signal between the mobile terminal and the second network element.

59. The wireless network communication method according to claim 58, wherein the specific channel satisfies at least one of the following conditions:

the specific channel is selected by the mobile terminal from a plurality of pre-defined channels;
a time window of the specific channel is determined according to a type of the first network element or a length of the signal in the specific form;
a frequency domain start position or a frequency domain center position of the specific channel is determined according to the type of the first network element;
the frequency domain start position of the specific channel is determined according to a value of a start symbol of the signal in the specific form;
a frequency domain range of the specific channel is determined according to the type of the first network element or the length of the signal in the specific form;
a frequency domain spacing of the specific channel is determined according to the type of the first network element;
a sub-carrier spacing of the specific channel is determined according to a carrier frequency;
a start sub-carrier of the specific channel is determined according to the carrier frequency;
the specific channel is selected by the second network element from the plurality of pre-defined channels;

the time window of the specific channel is specified by the second network element;

the frequency domain position of the specific channel is specified by the second network element;

the frequency domain range of the specific channel is specified by the second network element; and

a start time of the specific channel is determined by a half-frame time of a synchronization signal block of a cell where the second network element is located.

60. The wireless network communication method according to claim 58 or 59, wherein the signal in the specific form satisfies at least one of the following conditions:

a composition structure of the signal in the specific form is determined according to a type of the first network element;

a type of the signal in the specific form is determined according to a type of the mobile terminal;

a sequence of the signal in the specific form is determined according to the type of the first network element or a frequency domain position of the specific channel;

a length of the signal in the specific form is determined according to a frequency domain range of the specific channel or a time window of the specific channel;

a length of a preamble portion of the signal in the specific form is determined according to the type of the first network element;

the signal in the specific form contains identifier information of the mobile terminal;

the signal in the specific form contains capability information of the mobile terminal;

the sequence of the signal in the specific form is determined according to an index number of a cell served by the second network element or identifier information of the first network element, wherein the identifier information of the first network element is notified by the second network element to the mobile terminal;

the sequence of the signal in the specific form is determined according to an integer configured by the second network element for the mobile terminal, wherein the integer and the sequence have a mapping relationship; and

the signal in the specific form contains the identifier information of the mobile terminal.

61. The wireless network communication method according to any one of claims 58-60, wherein the method further comprises:

receiving, by the second network element, acknowledgment information sent by the first network element, wherein the acknowledgment information sent by the first network element is used for acknowledging that the first network element has detected the signal in the specific form or has detected the mobile terminal.

62. The wireless network communication method according to claim 61, wherein the acknowledgment information sent by the first network element satisfies at least one of the following conditions:

the acknowledgment information sent by the first network element contains identifier information of the first network element; and
the acknowledgment information sent by the first network element contains identifier information of the mobile terminal.

63. The wireless network communication method according to claim 58, wherein the method further comprises:
sending, by the second network element, third instruction information to the first network element, wherein the third instruction information is used for instructing the first network element to enable a service for the mobile terminal or disable a service for the mobile terminal.

64. The wireless network communication method according to claim 63, wherein after sending, by the second network element, the third instruction information to the first network element, the method further comprises:
receiving, by the second network element, second response information sent by the first network element, wherein the second response information is used for representing that the first network element accepts an instruction of the second network element or rejects an instruction of the second network element.

65. The wireless network communication method according to claim 58, wherein the method further comprises:
receiving, by the second network element, acknowledgment information sent by the first network element, wherein the acknowledgment information sent by the first network element is used for acknowledging that the first network element has detected the signal in the specific form or has detected the mobile terminal.

66. The wireless network communication method according to claim 58, wherein the method further comprises:
receiving, by the second network element, second request information sent by the mobile terminal, wherein the second request information is used for representing that the mobile terminal requests the second network element to instruct the first network element to enable a service for the mobile terminal or disable a service for the mobile terminal.

67. The wireless network communication method according to claim 66, wherein the method further comprises:
receiving, by the second network element, acknowledgment information sent by the mobile terminal, wherein the acknowledgment information sent by the mobile terminal is used for acknowledging that the first network element has detected the signal in the specific form or has detected the mobile terminal.

68. The wireless network communication method according to claim 67, wherein the second request information and the acknowledgment information sent by the mobile terminal are contained in the same signal and sent to the second network element, or the second request information and the acknowledgment information sent by the mobile terminal are contained in different signals, and the different signals are separately sent to the second network element.

69. The wireless network communication method according to claim 66, wherein after receiving, by the second network element, the second request information sent by the mobile terminal, the method further comprises:
sending, by the second network element, third response information to the mobile terminal, wherein the third response information is used for representing that the second network element accepts a request of the mobile terminal or rejects the request of the mobile terminal.

70. The wireless network communication method according to any one of claims 66-69, wherein the service comprises at least one of:

relaying, by the first network element, the signal sent by the mobile terminal to the second network element;
relaying, by the first network element, the signal sent by the second network element to the mobile terminal;
amplifying, by the first network element, the signal sent by the mobile terminal, and then relaying the amplified signal to the second network element;
amplifying, by the first network element, the signal sent by the second network element, and then relaying the amplified signal to the mobile terminal;
sending, by the first network element, position information of the mobile terminal to the second network element;
sending, by the first network element, the position information of the mobile terminal to the mobile terminal; and
providing, by the first network element, an emergency call for the mobile terminal.

71. A wireless network communication method, comprising:
sending, by a second network element, second instruction information to a mobile terminal, wherein the second instruction information is used for instructing the mobile terminal to detect a signal in a specific form on a specific channel, wherein the signal in the specific form is transmitted by a first network element, and the first network element is used for relaying a signal between the mobile terminal and the second network element.

72. The wireless network communication method according to claim 71, wherein the specific channel satisfies at least one of the following conditions:

the specific channel is selected by the first network element from a plurality of pre-defined channels;
a time window of the specific channel is determined according to a type of the mobile terminal or a length of the signal in the specific form;
a frequency domain start position or a frequency domain center position of the specific channel is determined according to the type of the first network element;
the frequency domain start position of the specific channel is determined according to a value of a start symbol of the signal in the specific form;
a frequency domain range of the specific channel is determined according to the type of the mobile terminal or the length of the signal in the specific form;
a frequency domain spacing of the specific channel is determined according to the type of the mobile terminal;
a sub-carrier spacing of the specific channel is determined according to a carrier frequency;
a start sub-carrier of the specific channel is determined according to the carrier frequency;
the specific channel is selected by the second network element from the plurality of pre-defined channels;
the time window of the specific channel is specified by the second network element;
the frequency domain position of the specific channel is specified by the second network element;
the frequency domain range of the specific channel is specified by the second network element;

and

a start time of the specific channel is determined according to a half-frame time where a cell synchronization signal block is located.

73. The wireless network communication method according to claim 71 or 72, wherein the signal in the specific form satisfies at least one of the following conditions:

a composition structure of the signal in the specific form is determined according to a type of the mobile terminal;

a sequence of the signal in the specific form is determined according to the type of the mobile terminal or a frequency domain position of the specific channel;

a length of the signal in the specific form is determined according to a frequency domain range of the specific channel or a time window range of the specific channel;

a length of a preamble portion of the signal in the specific form is determined according to the type of the mobile terminal;

the signal in the specific form contains identifier information of the first network element;

the signal in the specific form contains identifier information of a cell of the second network element;

the sequence of the signal in the specific form is determined according to an index number of a cell served by the second network element or identifier information of the first network element, wherein the identifier information of the first network element is notified by the second network element to the mobile terminal;

the sequence of the signal in the specific form is determined according to an integer configured by the second network element for the mobile terminal, wherein the integer and the sequence have a mapping relationship; and

the signal in the specific form contains identifier information of the mobile terminal.

74. The wireless network communication method according to any one of claims 71-73, wherein the method further comprises:

receiving, by the second network element, acknowledgment information sent by the mobile terminal, wherein the acknowledgment information sent by the mobile terminal is used for acknowledging that the mobile terminal has detected the signal in the specific form or has detected the first network element.

75. The wireless network communication method according to claim 74, wherein the acknowledgment information sent by the mobile terminal satisfies at least one of the following conditions:

the acknowledgment information sent by the mobile terminal contains identifier information of the mobile terminal; and

the acknowledgment information sent by the mobile terminal contains identifier information of the first network element;

76. The wireless network communication method according to claim 71, wherein the method further comprises:

sending, by the second network element, third instruction information to the first network element, wherein the third instruction information is used for instructing the first network element to enable a service for the mobile terminal or disable a service for the mobile terminal.

77. The wireless network communication method according to claim 71, wherein the method further comprises:

receiving, by the second network element, second request information sent by the mobile terminal, wherein the second request information is used for representing that the mobile terminal requests the second network element to instruct the first network element to enable a service for the mobile terminal or disable a service for the mobile terminal.

78. The wireless network communication method according to claim 77, wherein the method further comprises:

receiving, by the second network element, acknowledgment information sent by the mobile terminal, wherein the acknowledgment information sent by the mobile terminal is used for acknowledging that the mobile terminal has detected the signal in the specific form or has detected the first network element.

79. The wireless network communication method according to claim 78, wherein the second request information and the acknowledgment information sent by the mobile terminal are contained in the same signal and sent to the second network element, or the second request information and the acknowledgment information sent by the mobile terminal are contained in different signals, and the different signals are separately sent to the second network element.

80. The wireless network communication method according to claim 77, wherein after receiving, by the second network element, the second request information sent by the mobile terminal, the method further comprises:

sending, by the second network element, third response information to the mobile terminal, wherein the third response information is used for representing that the second network element accepts a request of the mobile terminal or rejects the request of the mobile terminal.

81. The wireless network communication method according to any one of claims 76-80, wherein the service comprises at least one of:

relaying, by the first network element, the signal sent by the mobile terminal to the second network element;

relaying, by the first network element, the signal sent by the second network element to the mobile terminal;

amplifying, by the first network element, the signal sent by the mobile terminal, and then relaying the amplified signal to the second network element;

amplifying, by the first network element, the signal sent by the second network element, and then relaying the amplified signal to the mobile terminal;

sending, by the first network element, position information of the mobile terminal to the second network element;

sending, by the first network element, the position information of the mobile terminal to the mobile terminal; and

providing, by the first network element, an emergency call for the mobile terminal.

82. An electronic device, comprising:

at least one processor; and
a memory in communication connection with the at least one processor, wherein
the memory stores instructions executable by the at least one processor, wherein the instructions, when executed by the at least one processor, cause the at least one processor to execute any one of:

the wireless network communication method according to any one of claims 1-14 or according to any one of claims 15-26, wherein the electronic device is the mobile terminal;

the wireless network communication method according to any one of claims 27-39 or according to any one of claims 40-57, wherein the electronic device is the first network element; or

the wireless network communication method according to any one of claims 58-70 or according to any one of claims 71-81, wherein the electronic device is the second network element.

83. A computer-readable storage medium, storing a computer program which, when executed by a processor, causes the processor to execute any one of:

the wireless network communication method according to any one of claims 1-14 or according to any one of claims 15-26;
the wireless network communication method according to any one of claims 27-39 or according to any one of claims 40-57; or
the wireless network communication method according to any one of claims 58-70 or according to any one of claims 71-81.

**Fig. 1**

| A mobile terminal establishes a link with a first network element, including: a signal in a specific form is transmitted on a specific channel, so that the first network element detects the signal in the specific form on the specific channel, wherein the link is used by the first network element to relay a signal between the mobile terminal and a second network element | 101 |

| The mobile terminal receives acknowledgment information sent by the first network element, wherein the acknowledgment information sent by the first network element is used for acknowledging that the first network element has detected the signal in the specific form or has detected the mobile terminal | 102 |

**Fig. 2**

| A mobile terminal receives first instruction information sent by a second network element, wherein the first instruction information is used for instructing the mobile terminal to transmit a signal in a specific form on a specific channel | 100 |

| The mobile terminal establishes a link with a first network element, including: the signal in the specific form is transmitted on the specific channel, so that the first network element detects the signal in the specific form on the specific channel, wherein the link is used by the first network element to relay a signal between the mobile terminal and the second network element | 101 |

**Fig. 3**

| A mobile terminal establishes a link with a first network element, including: a signal in a specific form is detected on a specific channel, wherein the link is used by the first network element to relay a signal between the mobile terminal and a second network element, and the signal in the specific form is transmitted by the first network element | 201 |

| The mobile terminal sends acknowledgment information to the first network element, wherein the acknowledgment information sent by the mobile terminal is used for acknowledging that the mobile terminal has detected the signal in the specific form or has detected the first network element | 202 |

**Fig. 4**

A mobile terminal receives second instruction information sent by a second network element, wherein the second instruction information is used for instructing the mobile terminal to detect a signal in a specific form on a specific channel  200

↓

The mobile terminal establishes a link with a first network element, including: the signal in the specific form is detected on the specific channel, wherein the link is used by the first network element to relay a signal between the mobile terminal and the second network element, and the signal in the specific form is transmitted by the first network element  201

**Fig. 5**

A first network element establishes a link with a mobile terminal, including: a signal in a specific form transmitted by the mobile terminal is detected on a specific channel; and the first network element relays a signal between the mobile terminal and a second network element according to the link  301

↓

The first network element receives third instruction information from the second network element, wherein the third instruction information is used for instructing the first network element to enable a service for the mobile terminal or disable a service for the mobile terminal  302

**Fig. 6**

A first network element establishes a link with a mobile terminal, including: a signal in a specific form is transmitted on a specific channel, so that the mobile terminal detects the signal in the specific form on the specific channel; and the first network element relays a signal between the mobile terminal and a second network element according to the link  401

↓

The first network element receives acknowledgment information sent by the mobile terminal, wherein the acknowledgment information sent by the mobile terminal is used for acknowledging that the mobile terminal has detected the signal in the specific form or has detected the first network element  402

**Fig. 7**

A first network element receives fifth instruction information sent by a second network element, wherein the fifth instruction information is used for instructing the first network element to transmit a signal in a specific form on a specific channel | 400

The first network element establishes a link with a mobile terminal, including: the signal in the specific form is transmitted on the specific channel, so that the mobile terminal detects the signal in the specific form on the specific channel; and the first network element relays a signal between the mobile terminal and the second network element according to the link | 401

**Fig. 8**

A second network element sends first instruction information to a mobile terminal, wherein the first instruction information is used for instructing the mobile terminal to transmit a signal in a specific form on a specific channel, so that a first network element detects the signal in the specific form on the specific channel, wherein the first network element is used for relaying a signal between the mobile terminal and the second network element | 501

The second network element receives acknowledgment information sent by the first network element, wherein the acknowledgment information sent by the first network element is used for acknowledging that the first network element has detected the signal in the specific form or has detected the mobile terminal | 502

**Fig. 9**

A second network element sends second instruction information to a mobile terminal, wherein the second instruction information is used for instructing the mobile terminal to detect a signal in a specific form on a specific channel; the signal in the specific form is transmitted by a first network element, and the first network element is used for relaying a signal between the mobile terminal and the second network element | 601

The second network element receives acknowledgment information sent by the mobile terminal, wherein the acknowledgment information sent by the mobile terminal is used for acknowledging that the mobile terminal has detected the signal in the specific form or has detected the first network element | 602

**Fig. 10**

1001

Processor

1002

Memory

## INTERNATIONAL SEARCH REPORT

| | International application No. |
| --- | --- |
| | **PCT/CN2022/105842** |

**A. CLASSIFICATION OF SUBJECT MATTER**

H04L 5/00(2006.01)i; H04W 40/22(2009.01)i

According to International Patent Classification (IPC) or to both national classification and IPC

**B. FIELDS SEARCHED**

Minimum documentation searched (classification system followed by classification symbols)

H04L5/-; H04W40/-

Documentation searched other than minimum documentation to the extent that such documents are included in the fields searched

Electronic data base consulted during the international search (name of data base and, where practicable, search terms used)

CNTXT, CNABS, CNKI: 中继, D2D, 检测, 信道, 建立, 连接, 发现, 信号, 指示, 指派, 配置, 资源; VEN, USTXT, WOTXT, EPTXT, 3GPP: relay, D2D, detect, channel, build, establish, connect, signal, assign, configuration, resource

**C. DOCUMENTS CONSIDERED TO BE RELEVANT**

| Category* | Citation of document, with indication, where appropriate, of the relevant passages | Relevant to claim No. |
| --- | --- | --- |
| X | CN 108028730 A (LG ELECTRONICS INC.) 11 May 2018 (2018-05-11) description, paragraphs [0080]-[0081], [0092]-[0094], [0100], and [0110]-[0111], and figures 4 and 5 | 1-83 |
| X | CN 106105345 A (LG ELECTRONICS INC.) 09 November 2016 (2016-11-09) descriptions, [0208], [0227]-[0229], and [0236], and figures 9 and 10 | 1-83 |
| A | US 2017374669 A1 (SONY CORP.) 28 December 2017 (2017-12-28) entire document | 1-83 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 September 2022** | **10 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105842**

| Patent document cited in search report | | | Publication date (day/month/year) | Patent family member(s) | | | Publication date (day/month/year) |
|---|---|---|---|---|---|---|---|
| CN | 108028730 | A | 11 May 2018 | JP | 2018528736 | A | 27 September 2018 |
| | | | | KR | 20180033589 | A | 03 April 2018 |
| | | | | EP | 3352402 | A1 | 25 July 2018 |
| | | | | WO | 2017048109 | A1 | 23 March 2017 |
| | | | | JP | 2020109984 | A | 16 July 2020 |
| | | | | US | 2021212089 | A1 | 08 July 2021 |
| | | | | US | 2020112977 | A1 | 09 April 2020 |
| | | | | US | 2019045526 | A1 | 07 February 2019 |
| | | | | EP | 3352402 | A4 | 17 July 2019 |
| | | | | US | 10536958 | B2 | 14 January 2020 |
| | | | | JP | 6672463 | B2 | 25 March 2020 |
| | | | | KR | 102128947 | B1 | 01 July 2020 |
| | | | | CN | 108028730 | B | 04 December 2020 |
| | | | | EP | 3352402 | B1 | 20 January 2021 |
| | | | | US | 10973041 | B2 | 06 April 2021 |
| CN | 106105345 | A | 09 November 2016 | WO | 2015142093 | A1 | 24 September 2015 |
| | | | | US | 2017026937 | A1 | 26 January 2017 |
| | | | | KR | 20160122194 | A | 21 October 2016 |
| | | | | KR | 101921989 | B1 | 26 November 2018 |
| | | | | US | 10237852 | B2 | 19 March 2019 |
| | | | | CN | 106105345 | B | 06 August 2019 |
| US | 2017374669 | A1 | 28 December 2017 | WO | 2016102441 | A1 | 30 June 2016 |
| | | | | CN | 107113837 | A | 29 August 2017 |
| | | | | EP | 3297390 | A1 | 21 March 2018 |
| | | | | EP | 3222110 | A1 | 27 September 2017 |
| | | | | US | 10645703 | B2 | 05 May 2020 |
| | | | | EP | 3222110 | B1 | 01 May 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2021109025606